# EUROPEAN PATENT SPECIFICATION

(11) **EP 4 622 523 B1**
(45) Date of publication and mention of the grant of the patent: **24.06.2026**
(21) Application number: 22821975.4
(22) Date of filing: 23.11.2022
(51) Int. Cl.: A47L 15/42, A47L 15/00

(54) **DISHWASHER WITH HEAT PUMP**
GESCHIRRSPÜLMASCHINE MIT WÄRMEPUMPE
LAVE-VAISSELLE AVEC POMPE À CHALEUR

(43) Date of publication of application: 01.10.2025
(73) Proprietor: ELECTROLUX APPLIANCES AKTIEBOLAG, 105 45 Stockholm (SE)
(72) Inventor: DEL POS, Maurizio, 33080 Porcia (IT); ROMANAZZI, Pietro, 33080 Porcia (IT)
(74) Representative: Electrolux Group Patents
(86) International application number: PCT/EP2022/082949
(87) International publication number: WO 2024/110028

(56) References cited:
- WO-A1-2019/143078
- US-A1- 2020 163 525
- US-A1- 2020 163 527
- US-B2- 10 758 105

## Description

The present invention relates to a dishwasher with a heat pump.

US 2020/0163525 A1 discloses a dishwasher having a heat pump with a reverse valve to change the flow direction of refrigerant, wherein washing liquid from the sump can be circulated to a plurality of injection arms.

It is an object of the invention to provide a dishwasher with an improved energy and/or drying efficiency.

The invention is defined in the independent claims, respectively. Particular embodiments are set out in the dependent claims.

According to claim 1, a dishwasher is provided. The dishwasher comprises a cabinet housing a tub for washing articles therein, a heat pump system having a compressor, an evaporator, a condenser, an expansion valve, and a refrigerant flow changing device adapted to change between a normal mode of the heat pump and a reverse mode of the heat pump, wherein the condenser comprises a first passage for circulating washing liquid and a second passage for circulating refrigerant, wherein the first and second passages being in heat-exchanging contact with each other, a heat exchanging medium in heat exchanging contact with the evaporator, wherein in the normal mode of the heat pump, the condenser is adapted to heat the washing liquid and the evaporator is adapted to cool the heat exchanging medium, and wherein in the reverse mode of the heat pump, the condenser is adapted to cool the washing liquid and the evaporator is adapted to heat the heat exchanging medium, a sump for collecting washing liquid, a control unit adapted to control the operation of the dishwasher during a washing cycle, a cover element arranged at the bottom of the tub above the sump, and a tub nozzle adapted to supply washing liquid into the interior of the tub and/or a sump nozzle adapted to supply washing liquid into the sump, wherein the tub nozzle and/or the sump nozzle are at least partially integrated in the cover element, and wherein the control unit is adapted to operate the heat pump in the reverse mode and at least temporally simultaneously to activate a circulation pump such that the cooled washing liquid from the sump is guided through the tub nozzle into the interior of the tub and/or the sump nozzle into the sump.

The 'reverse mode' may be used for regeneration of the heat exchanging medium and/or for drying the articles. In particular 'reverse mode' may mean that the heat pump is operated in a regeneration mode such that the refrigerant is heated up at the condenser working as an evaporator in the reverse mode and the refrigerant is cooled at the evaporator working as a condenser in the reverse mode (i.e. the heat exchanging medium in the evaporator tank is heated by the refrigerant). Thus, the heat exchanging medium can be regenerated, i.e. the solid phase (ice) of the heat exchanging medium which may form during the normal operation of the heat pump can be melt.

When circulating the washing liquid through the tub, in particular during a drying phase, in the reverse mode, the washing liquid is heated by the heat of the tub/structure of the dishwasher and the tub is thus cooled down. The extracted heat from the tub/structure of the dishwasher is then transferred in the condenser from the washing liquid to the refrigerant, via the refrigerant to the evaporator and in the evaporator from the refrigerant to the heat exchanging medium. Thus, by cooling down the tub, the remaining heat in the tub/structure of the dishwasher can be extracted and be used for regeneration of the heat exchanging medium.

Further, when circulating the washing liquid through the tub, in the reverse mode, the drying of the articles during a drying phase may be improved. In particular, the humidity within the air contained in the tub condensates when contacting the cooled tub interior and the drying of the washed articles is improved.

For the purposes herein the term 'washing liquid' refers to the liquid used during a washing phase as well as to the liquid used during a rinsing phase as well as to the liquid which is used (circulated) 'only' for regeneration and/or drying purposes when the heat exchanging medium is regenerated and/or the drying is improved by cooling the tub (interior).

The heat pump can be operated in the reverse mode and heat can be extracted from the washing liquid and transferred to the heat exchanging medium, even if the heat exchanging medium needs no regeneration (i.e. melting of iced heat and/or heating of heat exchanging medium). E.g. if in the previous heating steps only electrical heating of the washing liquid by a/the electrical heater is provided, the heat exchanging medium was not cooled down (and thus no ice has been formed) for transferring heat from the heat exchanging medium to the washing liquid. Nonetheless the heat exchanging medium may be heated up by extracting heat from the washing liquid (e.g. for drying purposes as described herein).

The heat exchanging medium preferably is a liquid. Preferably a liquid having a liquid/solid transition phase at a temperature such that a liquid/solid transition can be achieved at a temperature of the refrigerant in the evaporator and in the normal operation mode, and such that a solid/liquid transition can be achieved at a temperature of the refrigerant in the evaporator and in the reverse operation mode. Thereby heat can be extracted or deposited in the heat exchanging medium corresponding to the medium's latent heat. The heat exchanging medium may be water or water mixed with a salt increasing the latent heat and/or shifting the transition temperature, or a paraffin.

The tub is preferably made of metal such as steel and/or the sump is preferably made of plastic. When circulating the washing liquid through the sump, the washing liquid preferably does not contact the tub, and thus the tub is not or substantially not cooled by the washing liquid. When circulating the washing liquid through the tub, the washing liquid preferably contacts the inner wall of the tub and thus cools the tub down.

The 'interior' of the tub is preferably the region above the sump, more preferably above a (or any) filter at the tub bottom. The filter and the surrounding bottom wall of the tub preferably represents the bottom of the tub and thus the lower surface for the 'interior' of the tub.

Preferably, in the first passage of the condenser the washing liquid and in the second passage of the condenser the refrigerant is circulated.

The dishwasher may comprise a filtration assembly (such as the cover element mentioned further below) arranged at the sump. The filtration assembly may act as a filter for the washing liquid returning to the sump (e.g. after the washing fluid has been deployed in the tub via a spray device.

The cover element is preferably adapted to cover at least a portion of the sump. Preferably at least a portion of the cover element is arranged above a flow manifold or a flow controller and/or covers the flow manifold or flow controller. The flow manifold or flow controller may be arranged at the sump, preferably is integrated in the sump. The cover element may comprise a plurality of outlets each being aligned with one outlet of the flow manifold or the flow controller. Thus, washing liquid supplied through any of the outlets of the flow manifold or flow controller is guided through an outlet of the cover element.

Preferably, the cover element has a portion formed as a filter adapted to filter washing liquid flowing from the interior of the tub to the sump.

The cover element and the sump nozzle and/or the tub nozzle may be formed in a single piece, preferably fabricated from a plastic material.

The sump, in particular the flow controller or manifold fluidly connected to the sump and/or integrated in the sump, may comprise a plurality of washing fluid outlets connected to a washing liquid conduit system having one or more spray devices. In particular, the plurality of washing fluid outlets comprises one outlet for each spray device (spray arm) and an outlet A and/or an outlet B.

The sump comprises at least an or the outlet A and/or an or the outlet B, wherein the outlet A is fluidly connected to the sump nozzle via a flow channel, and/or the outlet B is fluidly connected to the tub nozzle. The outlet A may extend vertical or substantially vertical from the sump, and a side wall of the outlet A comprises an aperture fluidly connecting the outlet A to the flow channel.

Preferably, the cover element extends over the washing fluid outlets and the cover element comprises sump attachments, each sump attachment sized and shaped to fit over the respective washing liquid outlets of the sump to connect each of the plurality of washing fluid outlets to the respective spray devices (spray arms) and/or to the sump nozzle and/or the tub nozzle. In particular, the sump attachments extend from a lower surface of the cover element facing the washing fluid outlets.

Preferably, the cover element comprises a hub extending from an upper side of the cover element, wherein the hub is adapted to connect one washing fluid outlet of a or the plurality of outlets to a spray device being a lower spray arm. The hub is preferably made in one piece with the cover element.

Preferably, the sump nozzle and/or a or the flow channel connected to the sump nozzle is/are arranged at a lower surface of the cover element and/or the tub nozzle is arranged at a top surface of the cover element.

The sump nozzle and/or the flow channel are preferably arranged below the interior of the tub, i.e. facing away from the tub interior. The washing liquid flowing through the sump nozzle preferably does not flow through the interior of the tub and thus does not contact the articles therein.

The tub nozzle is preferably arranged within the interior of the tub, i.e. washing liquid exiting the tub nozzle is guided through the interior of the tub, in particular for cooling down the tub interior. The tub nozzle is preferably adapted such that washing liquid sprayed out of the nozzle does not contact the articles loaded in the dishwasher. Preferably, the tub nozzle sprays the washing liquid to the tub bottom.

The cover element may comprise a first part integrated in the cover element, and a second part integrated in the sump, wherein the first part and the second part are configured such that when the cover element is mounted at the sump, the first and second parts form the flow channel for guiding washing liquid from the outlet A via the sump nozzle into the sump. Preferably, the first part is formed in a single piece with the cover element and/or the second part is formed in a single piece with the sump.

The circulation pump is preferably a variable speed pump.

Preferably, the refrigerant flow changing device has a refrigerant inlet and a refrigerant outlet and which is adapted in a first switching state to fluidly connect the refrigerant inlet to a first pipe of the refrigerant circuit and the refrigerant outlet to a second pipe of the refrigerant circuit, and in a second switching state to fluidly connect the refrigerant inlet to the second pipe of the refrigerant circuit and the refrigerant outlet to the first pipe of the refrigerant circuit. The refrigerant flow changing device is preferably a 4-way-valve.

Preferably, the evaporator and/or the compressor and/or the expansion device and/or the refrigerant flow changing device is arranged in a bottom region or a basement of the dishwasher. The evaporator is preferably arranged within an evaporator tank containing the heat exchanging medium.

The evaporator tank is preferably arranged in a bottom region or in a basement of the dishwasher, preferably below the tub. The evaporator tank is preferably a closed tank for permanently storing a heat exchanging medium. Preferably, the evaporator tank is configured such that no or substantially no heat exchange with external components such as the tub of the dishwasher can occur. Therefore, the evaporator tank may be enclosed by a heat insulating material.

Preferably, the heat exchanging medium is adapted to change from a liquid phase to a solid phase and vice versa. In particular, when the heat pump is operated in the normal operation mode, the heat exchanging medium is cooled down and finally changes from the liquid to the solid phase for releasing heat. The heat released by the heat exchanging medium heats the refrigerant flowing through the evaporator which then evaporates. The heated refrigerant as a gas phase is sucked by the compressor and guided to the condenser. When the heat pump is operated in the reverse operation mode, the heat exchanging medium is heated up and finally changes from the solid to the liquid phase by absorbing the latent heat required for the phase change.

The washing cycle may comprise a washing phase (main wash phase), a hot rinse phase and a drying phase. Optionally a cold rinse phase is provided between the washing phase and the hot rinse phase. The hot rinse phase is preferably the phase in which hot washing liquid containing rinse aid is sprayed onto the articles in the tub. The drying phase preferably starts when circulation of washing liquid through the spray device is stopped.

### Washing liquid cooling path arrangements:

Preferably, the dishwasher comprises a washing liquid cooling path having: an inlet provided at the sump, the circulation pump, the first passage of the condenser for cooling down the washing liquid in the reverse mode of the heat pump and the sump nozzle for supplying the cooled washing liquid into the sump and/or the tub nozzle for supplying the cooled washing liquid back to the sump via the tub, wherein in particular the washing liquid cooling path bypasses the spray device for spraying washing liquid onto the articles in the tub.

'Bypasses the spray device' preferably means that when the heat pump is operated in the reverse mode and the washing liquid is guided along the washing liquid cooling path, then no washing liquid is guided to the spray device or any spray arm of the spray device. Thus, the articles are not contacted and not cooled by washing liquid supplied via the spray device. For example valves can be arranged such that the washing liquid flow to the spray device can be blocked or the flow controller below can be controlled such that the washing fluid outlets connected to any spray device can be closed.

The washing liquid cooling path may form a single flow path with one inlet and one outlet or may comprise several branches (such as the first and/or second cooling branch see below) each having its own outlet such that sections of the washing liquid cooling path run differently.

**In** the washing liquid cooling path, guiding the washing liquid from the first passage of the condenser via the sump nozzle into the sump may mean that the washing liquid is directly guided back to the sump, i.e. preferably without being guided through the tub interior or without having an open flow path in the interior of the tub.

Alternatively or additionally, guiding the washing liquid from the first passage of the condenser via the tub nozzle may mean that the washing liquid is guided back to the sump via the tub. I.e. the washing liquid cooling path is guided via the tub outlet into the interior of the tub, wherein the washing liquid cooling path comprises an open flow path section within the tub or a flow path section in heat exchange with the interior of the tub such that the circulated washing liquid exchanges heat with the interior of the tub and returns to the sump via the tub.

The washing liquid is preferably circulated along the washing liquid cooling path and in particular through the sump nozzle and/or the tub nozzle such that articles loaded within the dishwasher are not contacted by the cooled washing liquid.

Preferably, the washing liquid cooling path comprises: a first cooling branch connecting the first passage of the condenser to an outlet at or within the sump, and/or a second cooling branch connecting the first passage of the condenser to an outlet within the interior of the tub for cooling the interior of the tub, wherein the washing liquid guided along the second cooling branch returns to the sump via the tub. In addition, the dishwasher may further comprise a hydraulic circulation arrangement having at least one controllable component wherein by the control of the control unit the at least one controllable component is adapted to circulate the washing liquid pumped from the sump along the first cooling branch and/or the second cooling branch.

If the first and the second cooling branches are provided, the first and second cooling branches may be separate cooling branches wherein each is connected to a separate outlet of the first passage of the condenser. Alternatively, the first and second cooling branches may share the same outlet at the first passage of the condenser and have an at least partially common flow path downstream of the first passage of the condenser branching off at a branching point into the first and second cooling branch.

Preferably, the first passage of the condenser is arranged upstream of a flow controller or a flow manifold, and the flow controller or the flow manifold preferably comprises at least an outlet A and/or an outlet B, wherein the first cooling branch comprises the outlet A connecting the first passage of the condenser to the outlet at or within the sump, and/or wherein the second cooling branch comprises the outlet B connecting the first passage of the condenser to the outlet within the interior of the tub. More preferably, the first and second cooling branches have a common flow path section upstream of the flow controller or flow manifold.

The flow controller or flow manifold may be a device for guiding washing liquid along different flow paths.

The 'flow manifold' may comprise a plurality of valves adapted to guide the washing liquid along different flow paths such as the first and/or second cooling branch. The flow manifold may have one flow path for each spray arm of the spray device of the dishwasher, such as a lower spray arm, a middle spray arm and a top spray arm. Preferably, one valve is arranged in each of the flow paths upstream of the spray arms for opening and closing the washing liquid flow to each spray arm.

The 'flow controller' may comprise a plurality of washing fluid outlets such as the outlets A and/or B and/or one or more outlets connected to one or more spray arms of the spray device for spraying washing liquid to the articles. The flow controller may comprise one dedicated outlet for each of a lower spray arm, a middle spray arm, and a top spray arm. In case outlet A and B and the outlets for the lower spray arm, the middle spray arm and the top spray arm are provided, the flow controller preferably comprises 5 outlets in total. In case only outlet A or B is provided, the flow controller preferably comprises 4 outlets in total. The washing fluid outlets are preferably arranged at the tub bottom, more preferably are integrated in the sump.

The flow controller may include a positioning device and a disk rotatably arranged in relation to the plurality of washing fluid outlets, wherein the disk comprises a plurality of apertures arranged for selectively closing and opening the plurality of washing fluid outlets and/or the outlet A and/or B of the sump during rotation of the disk. When the positioning device aligns at least one of the plurality of apertures of the disk with at least one of the washing fluid outlets, the washing liquid is permitted to pass from the flow controller along each aligned washing fluid outlets. For example, when the positioning device aligns at least one of the plurality of apertures of the disk with the outlet A and/or B, the washing fluid is permitted to pass from the flow controller along the first and/or second cooling branch, respectively. Similar, when the positioning device aligns at least one of the plurality of apertures of the disk with at least one of the washing fluid outlets connected to the spray device, the washing fluid is supplied through the washing fluid outlet(s) from the flow controller via the respective spray device into the tub.

The control unit is preferably adapted to control the flow controller or the flow manifold such that the washing liquid is guided along one or more of the washing fluid outlets.
in an alternative water flow arrangement, the first passage of the condenser is arranged upstream of the flow controller or the flow manifold, wherein the flow controller or the flow manifold comprising at least one (washing fluid) outlet connected to the spray device, and wherein the first and/or the second cooling branches branch off downstream of the first passage of the condenser and upstream of the flow controller or the flow manifold. In this case, the first and/or second cooling branches do not comprise the flow controller or the flow manifold.

Preferably the flow controller or flow manifold has a closed position in which no washing liquid can pass through any outlet of the flow controller or flow manifold.

Each of the branched off paths of the first and/or second cooling branch may comprise a valve element such as an on/off valve.

Alternatively, the first and second cooling branches are provided and the first and second cooling branches downstream of the first passage of the condenser and upstream of the flow controller or flow manifold branch off (from the flow connection between condenser and flow controller) with a common flow path. For example the common flow path further comprises a branching point branching off into the first and second cooling branch. Preferably, one or more valves is/are arranged at the branching point such as a three-way valve.

The valve(s) is(are) preferably controllable by the control unit such that the washing liquid can be selectively guided along the first and/or the second cooling branch and/or through the flow controller or the flow manifold.

Preferably, the first passage of the condenser is arranged downstream of the flow controller or the flow manifold, wherein the flow controller or the flow manifold comprises at least one outlet connected to an inlet of the first passage of the condenser. Preferably the flow path downstream of the first passage of the condenser branches off into the first cooling branch connected to the outlet at or within the sump and into the second cooling branch connected to the outlet within the interior of the tub. If three outlets are provided, i.e. one outlet for each spray arm, and the above outlet connected to the first passage of the condenser, the flow controller has preferably at least 4 outlets in total.

Preferably the first and second cooling paths have a common flow path from the inlet to the circulation flow path at the sump to the point at which the flow path branches off into the first and second cooling paths downstream of the first passage of the condenser. **In** case the first and second cooling paths are provided, each of the first and second cooling paths may comprise a valve element (e.g. on/off valve in each branch) or one valve element, such as a two way valve, is provided at the branching point for guiding the washing liquid selectively along the first and/or the second cooling path.

Preferably the washing liquid is circulated along the washing liquid cooling path and the circulation flow path by using the same circulation pump. Alternatively, a second circulation pump may be provided for the circulation flow path. The first and/second circulation pump may be variable speed pump such that the liquid flow rate can be controlled, for example such that the washing liquid flow rate through a tub nozzle and/or a lower spray device is reduced or increased.

The dishwasher may comprise: a first circulation pump and a second circulation pump (the above mentioned circulation pump), a circulation flow path comprising: an inlet provided at the sump, and a flow controller or a flow manifold comprising at least one outlet connected to the spray device for spraying washing liquid into the interior of the tub and for supplying the washing liquid back to the sump. The first circulation pump is preferably configured to circulate the washing liquid along the circulation flow path, and
the second circulation pump is preferably configured to circulate the washing liquid along the washing liquid cooling path, in particular along the first and/or the second cooling branch.

Since the second circulation pump does not circulate washing liquid through the spray device and in particular to one or more of the lower, middle and/or top spray arm, the required pressure for circulating the washing liquid along the washing liquid cooling path (i.e. first and/or second cooling branch) is reduced as compared to the circulation of washing liquid along the circulation flow path.

Therefore, the second circulation pump may be smaller (i.e. with less power) than the first circulation pump. Thus, the energy consumption of the second circulation pump is less compared to the first circulation pump. Therefore, energy can be saved compared to a configuration with a single circulation pump used for the washing liquid cooling path and the circulation flow path.

Alternatively to the washing liquid cooling path having the first and second cooling branches, the dishwasher may further comprise a circulation flow path having an inlet provided at the sump, and a flow controller or a flow manifold comprising at least an outlet A and/or an outlet B, wherein the outlet A is connected to an outlet at or within the sump, and/or wherein the outlet B is connected to an outlet within the interior of the tub.

Thus washing liquid only flows through the first passage of the condenser when heat exchange is required. This results in less pump energy consumption and less soiling of condenser.

The washing liquid cooling path preferably comprises a controllable component being a control valve arranged upstream of the first passage of the condenser, wherein the control unit is adapted to control the control valve such that the washing liquid from the sump is guided along the washing liquid cooling path and/or along the circulation flow path. The control element may be a valve element, preferably an electronic valve. Alternatively, one valve element may be provided in each of the washing liquid cooling path and the circulation flow path.

The washing liquid cooling path and the circulation flow path may have an at least partially common flow paths downstream of the sump and/or upstream of the first passage of the condenser.

The flow path downstream of the sump and upstream of the first passage of the condenser may branch off at a branching point into the circulation flow path and the washing liquid cooling path. Preferably the control valve such as a three-way valve is arranged at the branching point.

Alternatively, the dishwasher comprises the flow controller or the flow manifold having at least an outlet A and an outlet B and being arranged upstream of the first passage of the condenser, a circulation flow path comprising: the inlet provided at the sump, and an outlet within the interior of the tub, wherein an inlet of the flow controller or flow manifold is connected to the inlet of the circulation flow path at the sump, and wherein the washing liquid cooling path comprises the outlet A which is connected to an inlet of the first passage of the condenser, and wherein the circulation flow path may comprise the outlet B which is connected to the outlet within the interior of the tub bypassing the condenser.

**In** this case, the washing liquid only flows through the first passage of the condenser, when the washing liquid is circulated along the washing liquid cooling path via the outlet A of the flow controller or flow manifold. By circulating the washing liquid through the outlet A, the washing liquid is cooled.

The cooled washing liquid in the sump can be circulated along the circulation flow path via the outlet B into the interior of the tub and the inner volume of the tub.

The control unit is preferably adapted to control the flow controller or the flow manifold such that the washing liquid is circulated through outlet A (and thus through the first passage of the condenser) or outlet B alternately or through outlet A and B at least partially simultaneously.

Preferably, the dishwasher comprises a or the flow controller having one or more outlets connected to one or more spray arms of the spray device, wherein the control unit is adapted to control the flow controller such that washing liquid circulated through the flow controller is guided to one or more spray arms of the spray device for spraying washing liquid to the articles in the tub. The washing liquid is preferably guided through the spray device(s) when the heat pump is operated in the normal mode such that heated washing liquid is sprayed on the articles contained in the tub.

Preferably, the spray device is disposed inside the tub and configured to spray washing liquid to the articles in the tub, and/or a or the flow controller has one or more outlets connected to one or more spray arms of the spray device, wherein in particular the control unit is adapted to control the flow controller such that washing liquid circulated through the flow controller is guided to one or more spray arms of the spray device.

Preferably the spray device comprises a lower spray arm arranged at the bottom of the tub, and/or a middle spray arm arranged at the middle of the tub and/or a top spray arm arranged at the top of the tub.

Preferably, the circulation pump for circulating the washing liquid to the spray device is the same circulation pump as the circulation pump for circulating the washing liquid along the washing liquid cooling path (in particular along the first and/or second cooling branch).

The control unit may be adapted to control the flow controller such that, during circulation of the washing liquid along the washing liquid cooling path, the one or more outlets connected to the one or more spray arms are closed such that no washing liquid passes through the one or more outlets of the flow controller.

Preferably, the flow controller is arranged below the cover element, and/or the cover element comprises a plurality of outlets each being assigned to one outlet of the flow controller.

Preferably, the evaporator and/or the compressor and/or the expansion device and/or the refrigerant flow changing device is arranged in a bottom region or a basement of the dishwasher. The evaporator is preferably arranged within an evaporator tank containing the heat exchanging medium. The evaporator tank is preferably arranged in a bottom region or in a basement of the dishwasher, preferably below the tub. The evaporator tank is preferably a closed tank.

The evaporator tank is preferably which is a closed tank for permanently storing a heat exchanging medium.

### Condenser:

Preferably, the condenser is arranged at a side wall of the cabinet housing. The condenser may be arranged within the cabinet housing facing the inner side of the cabinet side wall and/or the outer side of the tub. Preferably, when considering the normal operation position of the dishwasher, the condenser is arranged at the right side wall of the cabinet housing.

Preferably, the condenser extends in a vertical or substantially vertical plane.

The inlets and outlets of the condenser for the refrigerant and washing liquid may be arranged at a bottom region of the condenser, preferably the inlets and outlets are arranged at the lowest or substantially lowest vertical position of the condenser.

Preferably, the condenser comprises a first section and a second section each extending vertically or substantially vertically, and a third section connecting the first and second sections in an arc shape, wherein preferably the apex of the arc is the highest vertical point of the condenser. Alternatively or additionally, the third section forms an arc having an angle of 180° or substantially 180 °.

Preferably, the condenser is a tube-in-tube condenser comprising an inner tube forming the second (or the first) passage of the condenser and an outer tube forming the first (or second) passage of the condenser, and wherein the inner tube has a smaller cross section arranged within the outer tube having a larger cross section, and wherein in particular in the outer tube either the refrigerant or the washing liquid is flowing around the inner tube and wherein in the inner tube either the washing liquid or the refrigerant is flowing respectively.

The flow direction in the inner tube and the outer tube is preferably opposite to each other. The inner and outer tubes may have a circular cross section, wherein the smaller tubes have a smaller diameter and the larger tube has a larger diameter. However, both tubes can also have any other shape.

The inner tube may have a single circular tube or may have a plurality of parallel arranged tubes which are arranged within the outer tube.

The outer tube is preferably made of a plastic material and/or the inner tube is preferably made of a metal material such as copper.

The condenser and in particular the outer tube of the condenser may be enclosed by a heat insulating layer.

The inner tube may comprise at least two pipes arranged parallel or substantially parallel to each other. Preferably the condenser inner tube branches off into the at least two pipes at a first branching point (i.e. at the inner tube inlet) arranged within the outer tube, and merges to a single tube at a second branching point (i.e. at the inner tube outlet) arranged within the outer tube.

Preferably, the outer tube comprises a plurality of spacing elements arranged along the inner surface of the outer tube for receiving the inner tube, wherein the spacing elements are adapted such that after mounting the inner tube within the spacing element, the walls/surfaces of outer tube and the inner tube are separated or spaced from each other. The spacing elements are preferably made in one piece with the outer tube. **In** case the inner tube comprises a plurality of tubes, separate spacing elements for each tube may be provided or each spacing element is adapted to receive the plurality of tubes.

Except at the spacing elements, within the outer tube, the inner and outer walls or surfaces of the tubes preferably do not contact each other. The spacing elements enables that the distance between the inner tube and outer tube is constant.

Further, a method for operating a dishwasher, in particular a dishwasher as disclosed herein (see dishwasher claims and above) is provided. The dishwasher comprises a cabinet housing a tub for washing articles therein, a heat pump system having a compressor, an evaporator, and a condenser, an expansion valve, and a refrigerant flow changing device adapted to change between a normal mode of the heat pump and a reverse mode of the heat pump. The condenser comprises a first passage (preferably for circulating washing liquid) and a second passage (preferably for circulating refrigerant), wherein the first and second passages being in heat-exchanging contact with each other, a heat exchanging medium in heat exchanging contact with the evaporator, wherein in the normal mode of the heat pump, the condenser is adapted to heat the washing liquid and the evaporator is adapted to cool the heat exchanging medium, and wherein in the reverse mode of the heat pump, the condenser is adapted to cool the washing liquid and the evaporator is adapted to heat the heat exchanging medium, a sump for collecting washing liquid, a cover element arranged at the bottom of the tub above the sump, and a tub nozzle adapted to supply washing liquid into the interior of the tub and/or a sump nozzle adapted to supply washing liquid into the sump, wherein the tub nozzle and/or the sump nozzle are at least partially integrated in the cover element. Operating the dishwasher comprises: operating the heat pump in the reverse mode and at least temporally simultaneously to activate a circulation pump such that the cooled washing liquid from the sump is guided through the tub nozzle into the tub and/or the sump nozzle into the sump.

Preferably, operating the dishwasher comprises: operating the heat pump in a washing cycle in the reverse mode and circulating the washing liquid along a washing liquid cooling path from an inlet provided at the sump, through the first passage of the condenser for cooling down the washing liquid and to at least one outlet to supply the cooled washing liquid back to the sump, wherein in particular during circulation of the washing liquid the spray device is bypassed.

The washing liquid cooling path may comprise a or the above first cooling branch and/or a or the above second cooling branch, wherein operating the dishwasher comprises: in a first heat exchange mode a) of a washing cycle: operating the heat pump in the reverse mode and circulating along the first cooling branch the washing liquid from an inlet of the washing liquid cooling path at the sump back to an outlet at or within the sump, and/or in a second heat exchange mode b) of the washing cycle: operating the heat pump in the reverse mode and conveying along the second cooling branch the washing liquid from an inlet of the circulation flow path at the sump, into the interior of the tub for cooling the interior of the tub and from there back into the sump via the tub.

Preferably or mandatory in heat exchange mode a) and where the washing liquid is 'supplied back into the sump' the washing liquid does not pass or flow through the interior of the tub.

The first heat exchange mode a) is preferably used during a first washing phase and/or time period of the washing cycle and the second heat exchange mode b) is preferably used during a second washing phase and/or time period of a washing cycle subsequent to the first washing phase and/or time period.

In both heat exchange modes a) and b), the washing liquid is preferably cooled due to the reverse operation mode of the heat pump. Thus, cooled washing liquid is circulated between the sump and the tub and/or sump.

Circulation in the first heat exchange mode a) is preferably used for regeneration/defrosting the heat exchanging medium which is preferably contained in the evaporator tank.

Circulation in the second heat exchange mode b) is preferably used for cooling down the tub and/or the hot air within the tub, preferably during a drying phase for improving the drying process. Additionally to the cooling down of the tub, the heat exchanging medium may be regenerated. In the second heat exchange mode b), the washing liquid introduced into the interior of the tub automatically flows back into the sump due to gravity and can again be circulated.

Alternatively, the dishwasher comprises a circulation flow path having an or the inlet at the sump and an outlet at the interior of the tub, wherein operating the dishwasher comprises: in a first heat exchange mode a) of a washing cycle: operating the heat pump in the reverse mode and circulating the washing liquid along the washing liquid cooling path from an inlet at the sump back to an outlet at or within the sump, and/or in a second heat exchange mode b) of the washing cycle: operating the heat pump in the reverse mode and conveying the washing liquid along the circulation flow path from the inlet at the sump, into the interior of the tub for cooling the interior of the tub and from there back into the sump via the tub.

The circulation flow path is preferably at least partially separate from the washing liquid cooling path. In particular, only the washing liquid cooling path comprises the first passage of the condenser, i.e. washing liquid is only cooled when circulated along the washing liquid cooling path.

The arrangements and components of the washing liquid cooling path and/or circulation flow path is described in detail with respect to the dishwasher above. These arrangements and components are also applicable for the method described herein.

The first heat exchange mode a) is preferably executed at an end of a wash phase and/or at an end of a cold rinse phase and/or at an end of a hot rinse phase of the washing cycle and/or at least partially during a drying phase, and/or the first heat exchange mode a) is preferably executed before draining at the end of the wash phase and/or the cold rinse phase. The cold rinse phase of the washing cycle may be an optional phase.

When in the heating phase the washing liquid is heated by operating the heat pump in the normal operation mode, the heat exchanging medium in the evaporator tank cools and the heat exchanging medium may finally freeze where the latent heat from the phase change from liquid to solid is set free. The solid phase (ice) can then be regenerated by executing the first heat exchange mode a) without cooling the tub and thus improving the efficiency of the washing cycle.

The washing liquid within the sump is cooled by the regeneration mode of the heat pump such that the residual heat contained in the washing liquid can be transferred to the evaporator tank before being drained out of the dishwasher.

### Drying phase:

Preferably, the second heat exchange mode b) is executed during a drying phase of the washing cycle.

Preferably, the first heat exchange mode a) is executed in the drying phase in addition to the second heat exchange mode b). The first heat exchange mode a) may be executed at the beginning of the drying phase, and the second heat exchange mode b) may be executed subsequent or at least partially simultaneously to the first heat exchange mode a) during the drying phase.

Thus, the washing liquid can be cooled during the first heat exchange mode a) and the cooled washing liquid can then be circulated through the tub via the second heat exchange mode b).

Since the washing liquid is cooled during circulation in the first heat exchange mode a) and thus has a decreased temperature, the cooling efficiency of the washing liquid circulated during the second heat exchange mode b) for cooling the tub is improved.

The dishwasher may comprise an internal air circulation path for circulating air within the tub, wherein the air circulation is activated by activating a blower during the drying phase. Preferably the air circulation is executed during operation of the heat pump in the reverse mode and during the circulation of the washing liquid through the tub (i.e. second heat exchange mode b)), more preferably after the circulation of the washing liquid through the sump (i.e. first heat exchange mode a)) is finished.

Preferably the air circulation path comprises an inlet and an outlet each in communication with the interior of the tub, wherein the blower is arranged within the air circulation path. The inlet and outlet are preferably arranged at side wall of the tub. Preferably the inlet and outlet are arranged at opposing side walls of the tub. The inlet may be arranged at a top region of the tub/tub side wall and the outlet at a bottom region of the tub/tub side wall.

The air at the bottom can be cooled by the second heat exchange mode b) and the cooled air can be circulated to the top region of the tub. Hot air from the top is circulated to the bottom region and can be cooled by the cooled washing liquid introduced into the tub interior. Thus, the internal air circulation can assist the cooling of the air within the tub and thus the drying of the articles. As a side effect, heat extracted from the hot air within the tub can be transferred to the heat exchanging medium and may thus regenerate the heat exchanging medium by e.g. melting of the solid phase and/or by heating the solid/liquid medium.

Preferably, a tub opening is automatically provided after the drying phase in finished. For example, the tub opening is achieved by at least partially opening of a door of the dishwasher. Due to the opening of the tub, and in particular of the door, the warm air (having still a residual humidity) can flow out of the tub and the tub interior cools down. Thus the drying of the articles is further improved. The tub or the door may be closed automatically after a predetermined time period has expired.

When the washing liquid is circulated through the interior of the tub, the heat pump, the compressor of the heat pump, and/or a or the blower of the air circulation path are preferably operated continuously or pulsed and/or the compressor and the blower are operated at least partially simultaneously.

'Pulsed' means that the components are operated alternating in an on or off state, e.g. the blower is activated for 10 min, and is then turned off for 10 min. The pulsed operation saves energy.

In case no internal air circulation path is provided, the tub opening is preferably provided during the drying phase. For example, the door of the dishwasher may be at least partially opened automatically during the drying phase, wherein preferably the door is opened when the circulation of the washing liquid through the tub is finished. The door opening allows an air exchange between the interior of the tub and the ambient. Thus the cooling of the tub and the drying of the articles is improved. Preferably the door remains opened at least until the drying phase is finished. After the end of the drying phase, the door may be closed automatically, in particular after a predetermined time has expired.

Preferably, during circulation of the washing liquid through the tub interior, the air within the tub is cooled via the cooled washing liquid supplied into the interior of the tub to dehumidify the air in the tub. During the circulation of the washing liquid through the tub, the washing liquid is preferably heated by exchanging heat with the air within the tub and/or the interior of the tub, and the washing liquid is cooled by exchanging heat with the heat exchanging medium.

Thus, the circulation through the tub improves the drying efficiency and may further result in an improved regeneration of the heat exchanging medium. In particular, the heat contained in the air within the tub (from the hot dishes) is transferred to the heat exchanging medium.

Preferably, at the beginning of the drying phase and/or after draining of washing liquid in a final rinse phase, the blower is activated (and/or the washing liquid is circulated through the tub (i.e. in the second heat exchange mode b)) after a predetermined time period has expired. Preferably at the end of the final rinse phase the heat pump is operated in the reverse mode and by circulating the washing liquid, which was used in the final rinse phase, is cooled down for transferring heat from the washing liquid to the refrigerant and finally to the heat exchanging medium (as described herein). I.e. during the predetermined time period the heat pump is operated and the washing liquid is cooled down. This cooled washing liquid can be used during the initial phase of the drying phase for cooling the tub interior. Then the blower is activated (after the predetermined time period) to further cool down the interior (air) of the tub.

'Operating component' may e.g. be all components of the heat pump, or all components for circulating the washing liquid along the washing liquid cooling path, in particular along the first and/or second cooling branch in the first and/or second heat exchange mode, or e.g. the blower for air circulation within the tub if the dishwasher comprises the closed drying loop.

### Different heating strategies:

The dishwasher may comprise an electrical heater arranged to heat the washing liquid. Further, the control unit may be adapted to heat the washing liquid in the washing cycle by operating the heat pump in the normal mode, and/or by operating the electrical heater, and then, in dependency of which type of heating was used in the preceding washing liquid heating phase or was used in the preceding washing liquid phases, to operate the heat pump in the reverse mode for extracting heat from the heated washing liquid.

Heating the washing liquid by operating the heat pump in the normal mode and/or by operating the electrical heater may include heating only by operating the heat pump, only by operating the electrical heater or by operating the heat pump and the electrical heater.

This may also include e.g. the case in which the washing liquid is only heated by the electrical heater and the heat pump is not operated in the normal mode for heating the washing liquid.

Preferably the washing liquid is heated in a wash phase of the washing cycle.

Preferably, in dependency of one or more of the following:
- quantity of articles to be washed,
- quantity of washing liquid within the dishwasher,
- washing liquid temperature,
the heat pump is operated in the reverse mode (preferably circulation through the sump without passing through tub interior) in the wash phase, preferably at the end of the wash phase, and/or in the cold rinse phase of the washing cycle, preferably at the end of the cold rinse phase.

Preferably, operating the heat pump in the reverse mode additionally depends on a program selected by a user at the dishwasher or by a device connected to the dishwasher such as a smartphone.

If e.g. in the hot rinse phase the washing liquid is only heated by the electric heater or if no cold rinse phase is provided, then it may be not necessary to regenerate the heat exchanging medium by operating the heat pump in the reverse mode.

If e.g. the washing liquid is heated in the preceding heating phase by the electrical heater, the heat pump is preferably not operated in the reverse mode in the wash phase and the cold rinse phase. Heating by only using the electrical heater means that no solid phase of the heat exchanging medium is formed in evaporator tank.

If e.g. the washing liquid is heated in the preceding heating phase by operating the heat pump in the normal mode, the heat pump is preferably operated in the reverse mode in the wash phase and the cold rinse phase.

The washing liquid may be heated in the preceding heating phase by operating the heat pump in the normal mode and the electrical heater successively or at least partially simultaneously.

### When operating heat pump and electrical heater successively

a) The main heating of the washing liquid is by operating the heat pump in normal mode and the heating by the electrical heater is an auxiliary heating. I.e. the majority of the heating is carried out by the heat pump in normal mode and the electrical heater only supports the heating. In this case the heat pump may be operated in the reverse mode only in the wash phase and not in the cold rinse phase.
b) The main heating of the washing liquid is by operating the electrical heater and the heating is assisted by operating the heat pump in the normal mode (an auxiliary heating by the heat pump). I.e. the majority of the heating is carried out by the electrical heater and the heat pump in normal mode only supports the heating. In this case the heat pump may not be operated in the reverse mode in any of the cold rinse phase and the wash phase.

### When operating heat pump and electrical heater at least partially simultaneously

In this case the heat pump may be operated in the reverse mode only in the cold rinse phase and not in the wash phase. This kind of heating may be applied in a fast/quick washing program of the dishwasher. Since the heating is achieved by the heat pump and the electrical heater simultaneously, less solid phase may form in the evaporator tank. Thus it may be sufficient to only regenerate the evaporator tank by the heat pump in the cold rinse phase.

**In** a further embodiment, operating the dishwasher may comprise: heating the washing liquid in a washing phase of a washing cycle by operating the heat pump in the normal mode, then, operating the heat pump in the reverse mode for extracting heat from the heated washing liquid and circulating the washing liquid along the washing liquid cooling path, and then, heating the washing liquid in a hot rinse phase of the washing cycle by operating the heat pump in the normal mode. Thus, the heat contained in the washing liquid can be used for heating the heat exchanging medium and the evaporator and thus melting the solid phase (ice) which may be formed in the evaporator tank.

Preferably, the method comprises operating, after heating the washing liquid in the hot rinse phase, the heat pump in the reverse mode and circulating the washing liquid along the washing liquid cooling path.

Preferably, a cold rinse phase is provided between the washing phase and the hot rinse phase, and wherein preferably the method comprises operating the heat pump in the cold rinse phase in the reverse mode and circulating the washing liquid along the washing liquid cooling path.

Each individual feature of the dishwasher can be combined with the method, or any sub-group of features (e.g. any of the dependent claims) of the dishwasher can be individually combined with the method. Vice versa any individual (functional) feature or sub-group of (functional) features of the method can be combined with the dishwasher as a functional feature of the machine.

Any feature disclosed herein (for the above embodiments and/or configurations and from the below described detailed embodiments and modifications) can be combined with the claimed subject individually or in any sub-combination. If herein the conjunction "and/or" is used all logical elements and combinations are individually disclosed. E.g. a, b and/or c discloses the elements/combinations a, b, c, ab, ac, bc as well as abc.

Reference is made in detail to preferred embodiments of the invention, examples of which are illustrated in the accompanying figures, which show:
- Fig. 1: a perspective view of a dishwasher,
- Fig. 2: another perspective view of the dishwasher of Fig. 1 without the door, the side walls and the top wall of the tub,
- Fig. 3: a perspective view of the dishwasher of Fig. 2 without the tub bottom,
- Fig. 4: a top view of the dishwasher of Fig. 3 without the air circulation path,
- Fig. 5: a perspective view of the dishwasher of Fig. 4,
- Fig. 6: another perspective view of the dishwasher of Fig. 5,
- Fig. 7: a perspective view of the refrigerant circulation circuit of Fig. 6,
- Fig. 8: a perspective view of the sump and the filtration assembly of the dishwasher of Fig. 3,
- Fig. 9: a perspective view of the sump and the flow controller,
- Fig. 10: a sectional view of the flow channel formed between the cover element and the sump,
- Fig. 11: a perspective view from below of the cover element of Fig. 10,
- Fig. 12: an exploded view of the sump and the flow controller of Fig. 9,
- Fig. 13: an enlarged view of the tub nozzle spraying washing liquid at different flow rates,
- Fig. 14: an enlarged view of the lower spray arm spraying washing liquid with a reduced flow rate,
- Fig. 15: a schematic view of the heat pump and washing liquid flow path arrangement of the dishwasher of Fig. 5,
- Fig. 16: a schematic view of another heat pump and washing liquid flow path arrangement,
- Fig. 17: a schematic view of another heat pump and washing liquid flow path arrangement,
- Fig. 18: a schematic view of another heat pump and washing liquid flow path arrangement,
- Fig. 19: a schematic view of another heat pump and washing liquid flow path arrangement,
- Fig. 20: a schematic view of another heat pump and washing liquid flow path arrangement,
- Fig. 21: a schematic view of another heat pump and washing liquid flow path arrangement,
- Fig. 22: a schematic view of a washing cycle having different phases,
- Fig. 23: a detailed view of a drying phase as shown in Fig. 22, and
- Fig. 24: a detailed view of another drying phase.

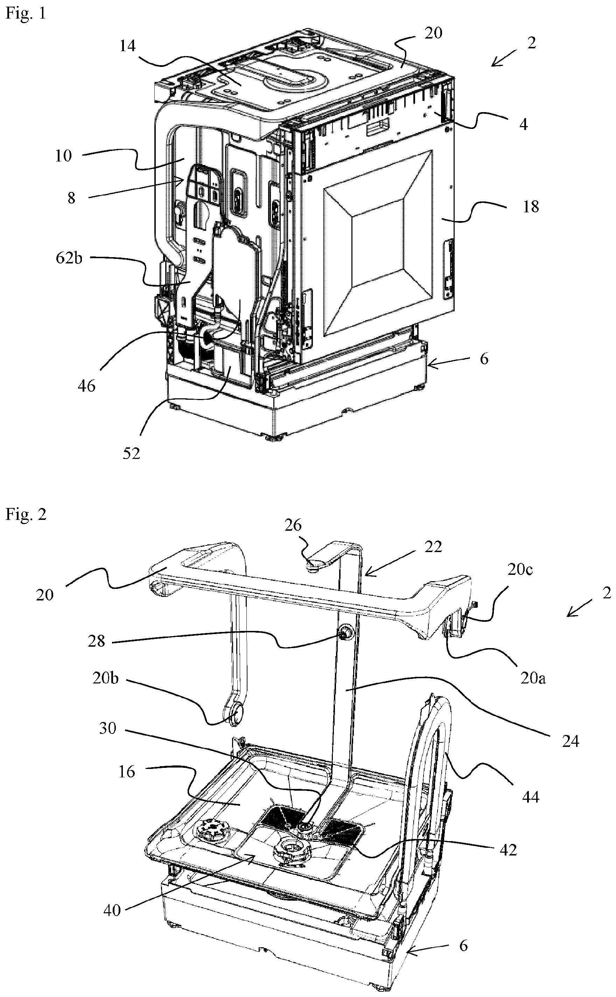

Fig. 1 is a perspective view of a dishwasher having a heat pump system and Fig. 2 is another perspective view of the dishwasher of Fig. 1 without the door, the side walls and the top wall of the tub. The dishwasher 2 comprises a cabinet (not shown) housing a tub 8 for washing articles therein. The tub 8 comprises side walls 10, a top wall 14, a rear wall (not shown), and a tub bottom 16 (see Fig. 2). The cabinet may further comprise a basement 6 arranged below the tub bottom 16.

Dishes, utensils, and other dishware (also referred to herein as 'articles') may be placed in the tub 8 for cleaning. The dishwasher 2 may also include slidable lower and upper racks or baskets (not shown) for holding the articles to be cleaned. The racks may be movable into and out of the tub 8. The dishwasher 2 may further comprise a door 18 that may be pivotably connected with the tub 8 to selectively permit access to the tub 8 for loading and unloading the articles and which is closed when the dishwasher 2 is operating (e.g. when the articles in the dishwasher 2 are washed and/or cleaned).

The dishwasher 2 may have a control panel 4 which is preferably arranged at an upper region of the dishwasher front face, e.g. at the middle and/or right side of the upper region of the dishwasher front face. Preferably, the control panel 4 is integrated in the door 18, more preferably arranged at an upper region of the door 18. The control panel 4 preferably comprises a display for displaying information about the washing program (e. g. energy consumption, duration of the washing cycle and the like) and an input device for selecting between different washing programs.

As shown in Figs. 1 and 2, the dishwasher 2 may comprise an internal air circulation path 20 for circulating air within the tub 8, preferably during drying of the articles contained in the tub 8. The air circulation path 20 may comprise an inlet 20a and an outlet 20b each connected to the interior of the tub 8. Preferably, a blower 20c is provided at or close to the inlet 20a. Preferably, the inlet 20a and outlet 20b are arranged at opposing side walls of the tub 8. With respect to the normal operation position of the dishwasher, the inlet 20a is preferably arranged on the right side wall and the outlet 20b is arranged at the left side wall of the tub 8. The inlet 20a may be arranged at a vertical position which is higher than the vertical position of the outlet 20b. The air circulation path 20 preferably extends external to the tub 8.

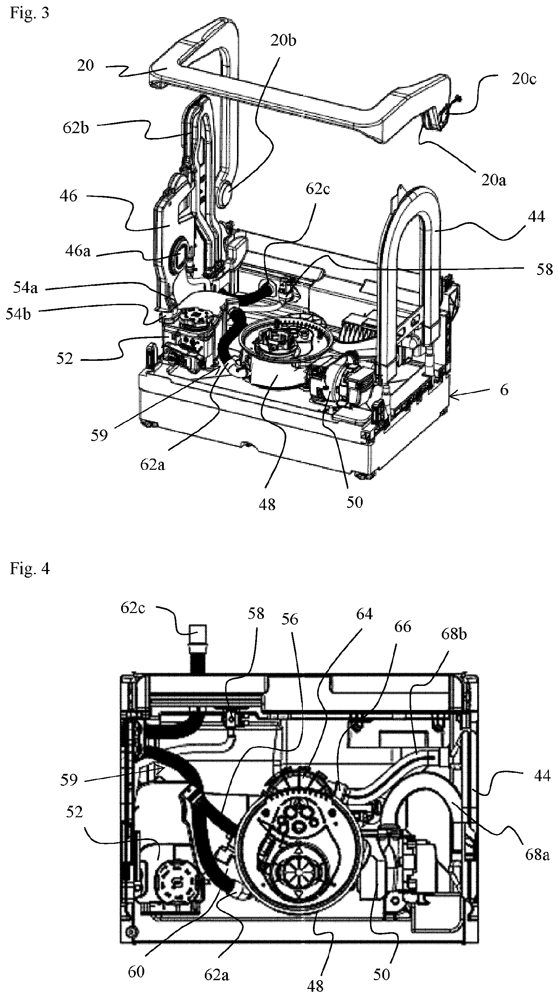

As shown in Figs. 2 and 3, the dishwasher 2 may comprise a washing liquid circulation path for circulating the washing liquid during a washing cycle. In particular, the washing liquid collected in a sump 48 (see Fig. 3) may be pumped via a circulation pump 50 through a washing liquid conduit system 22 into the interior of the tub 8. The washing liquid conduit system 22 includes a delivery conduit 24 that is fluidly connected to one or more spray devices (the spray devices are not shown). In the exemplary embodiment, the delivery conduit comprises a connector 26 adapted to be connected to a first spray device (e.g. top spray device 26a), a connector 28 adapted to be connected to a second spray device (e.g. middle spray device 28a), and a connector 30 adapted to be connected to a third spray device (e.g. a lower spray device 30a). The top spray device is preferably proximate to a top portion of the dishwasher, the lower spray device is preferably proximate the tub bottom 16, and the middle spray device is preferably located between the top and lower spray devices. The delivery conduit 24 and spray devices of the washing liquid conduit system are configured for spraying the washing liquid, under pressure, onto the articles contained in the tub 8 during dishwasher use.

As shown in Fig. 2, the dishwasher 2 may comprise a filtration assembly 40 that is connected to a sump 48 (see Fig. 3). The filtration assembly 40 is configured to filter the washing liquid returning to the sump 48 after washing liquid has been deployed in the tub 8.

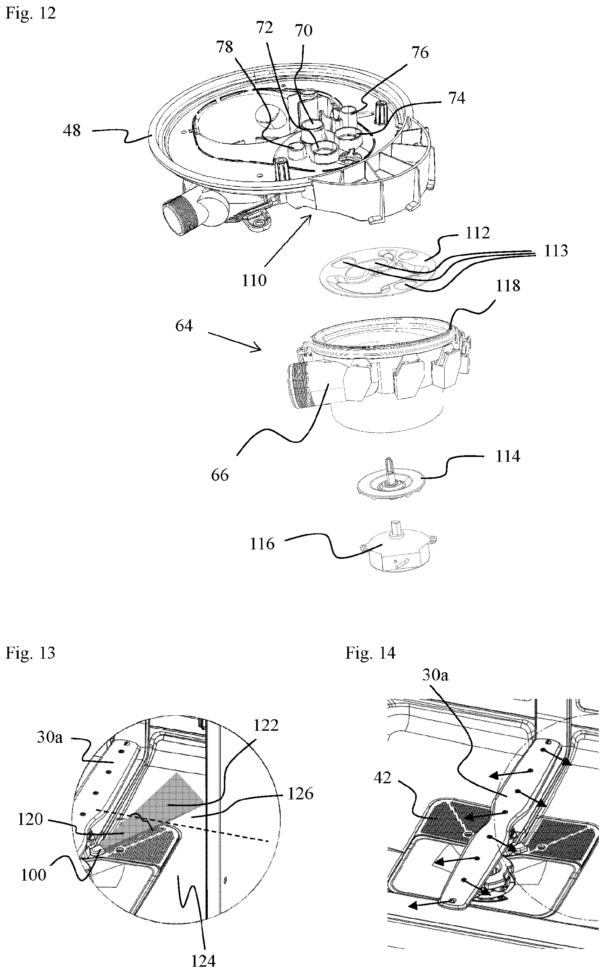

The dishwasher 2 may include a control unit (not shown) in communication with one or more of the dishwasher's functional components. E.g. the control unit may be in communication with a circulation pump 50 and may be configured to selectively operate the circulation pump 50 to pump washing fluid to at least one of the spray devices of the washing liquid conduit system 22. In accordance with some embodiments, the dishwasher may comprise a flow manifold or a flow controller 64 (flow manifold may be any device having valves for guiding the washing liquid along different flow paths, flow controller is preferably a device as it is shown e.g. in Fig. 13). The control unit may be adapted to control the flow controller 64, as will be described in more detail below. The control unit may include a memory for storage of data such as routines for operation of dishwasher 2.

As shown in Figs. 3 and 4, the dishwasher 2 comprises the sump 48 for collecting washing liquid, typically under the influence of gravity. The washing liquid is used by the dishwasher 2 to clean, wash and rinse the articles. The sump 20 is arranged below the tub bottom 18, in particular the sump 48 is fluidly connected from below to the tub bottom 18, such that the washing liquid within the tub 8 can flow into the sump 48.

The dishwasher 2 may comprise a fresh water tank assembly 46 having a fluid connection to water mains. A fresh water inlet valve (not shown) may be provided upstream of the fresh water tank assembly 46 for enabling or blocking flow of fresh water into the dishwasher 2. As shown in Fig. 3, a flow meter 58 may be provided upstream of the fresh water tank assembly 46 for providing a feedback signal indicating the amount of supplied fresh water to the control unit. The fresh water tank assembly 46 may comprise a tank for storing fresh water. The fresh water tank assembly 46 may further comprise a ventilation connection 46a to the tub 8 for equalizing the pressure between the fresh water tank assembly 46 and the tub 8 and/or if the water tank overflows, the overflowing washing liquid is guided through the connection 46a into the tub interior.

In case, the dishwasher comprises a softener assembly 52 (as shown in the figures herein), an outlet 54a of the tank assembly 46 is connected to a salt container of the softener assembly 46, and another outlet 54b of the tank assembly 46 is connected to a resin container 54b of the softener assembly 46. The fresh water flowing out of the tank assembly 52 may be guided either through the outlet 54b connected to the resin container (for softening the fresh water), or, if a regeneration of the resin in the resin container is necessary, through the outlet 54a connected to the salt container and then through the resin container. A valve element (not shown) such as a two-way valve may be provided upstream of the salt container and preferably downstream of the outlet 54a for enabling or blocking water flow into the salt container. The softener assembly 52 is preferably arranged at least partially below the tank assembly 46. A tank valve (not shown) may be provided downstream of the water tank assembly 46 and upstream of the softener assembly 52 for enabling or blocking water flow out of the water tank assembly 46.

The softener assembly 52 may comprise an outlet which is connected to the sump 48 via a flow connection 56 (see Fig. 4). For example, fresh water can be supplied directly to the sump 48 via the tank assembly 46. Alternatively, the tank assembly 46 can be filled with fresh water which can be supplied to the sump 48 in a subsequent phase of the washing cycle or in a subsequent washing cycle.

The dishwasher 2 may comprise a draining circuit 59 for draining the washing liquid in the sump 48, via a drain pump 60, out of the dishwasher 2. The draining circuit 59 may comprise a first, second and third draining path section 62a-c. The first draining path section 62a comprises an inlet at the sump 48 and the outlet of the first draining path section 62a is connected to an inlet of the second draining path section 62b which is preferably arranged at a side wall of the tub 8. An outlet of the second draining path section 62b is connected to an inlet of the third draining path section 62c guiding the washing liquid out of the dishwasher 2.

The second draining path section 62b may comprise a siphon or air gap for preventing dirty water to flow back into the dishwasher 2. In particular, the second draining path section 62b may extend from the bottom to the top and from the top to the bottom forming a siphon. Thus, when the drain pump 60 for draining the washing liquid is stopped, the remaining dirty washing liquid within the second draining path section 62b flows out of the draining path 62b due to gravity. When the draining circuit 59 has a clog or blockage downstream of the air gap/siphon, no dirty water can flow from the outside of the dishwasher 2 back into the dishwasher 2 via the second draining path section 62b due to the siphon/air gap.

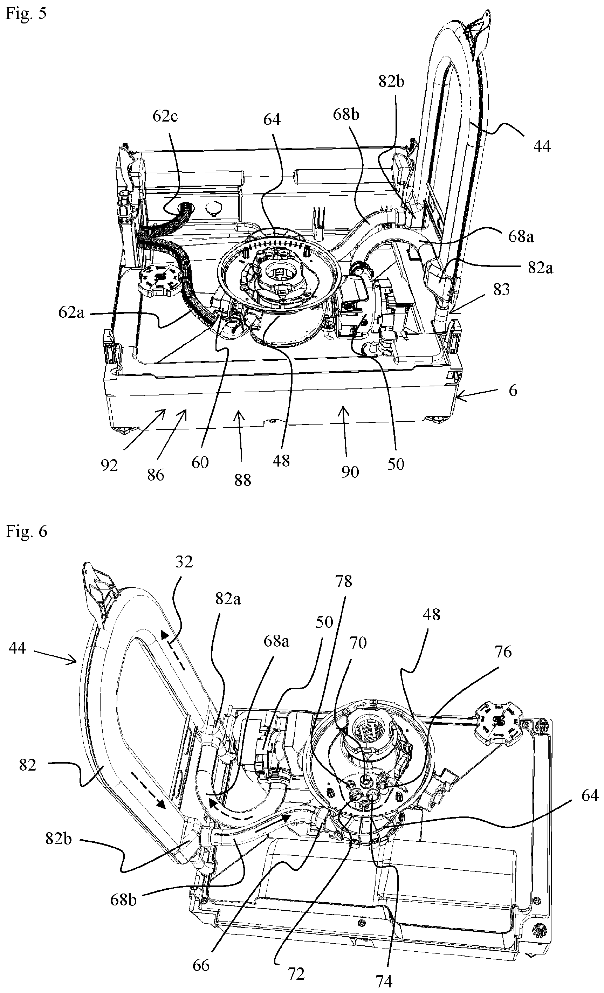

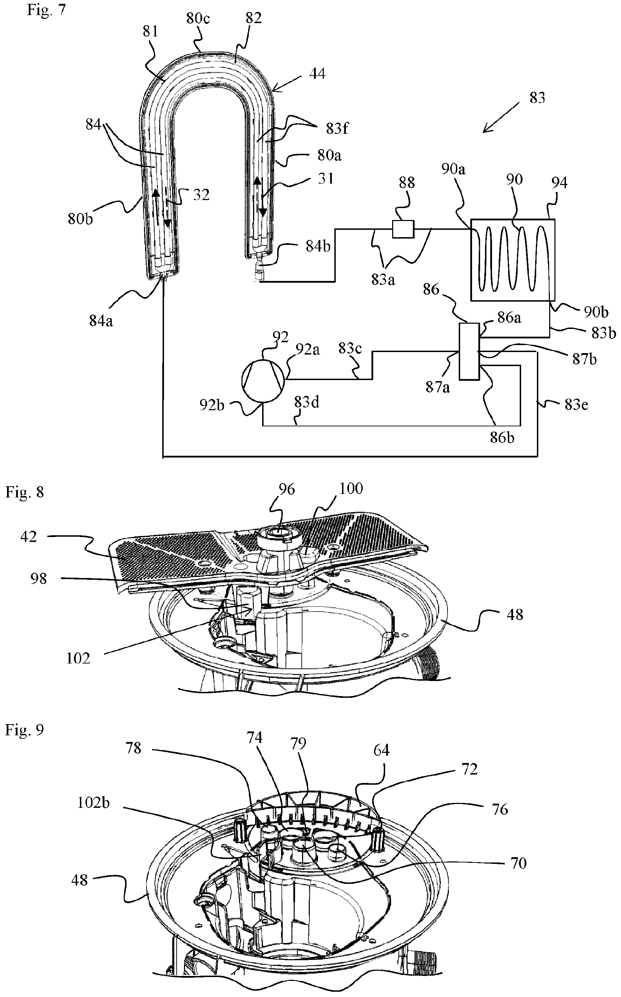

The refrigerant flow direction 31 of the refrigerant in the heat pump system of the dishwasher 2 and the washing liquid flow direction 32 are indicated by arrows in some of the following Figures (see: Figs. 6 and 7). Therefore, a dashed arrow defines the washing liquid flow direction 32 and a filled arrow indicates the refrigerant flow direction 31. These definitions for the flow directions are valid for the figures herein. The refrigerant flow direction 31 shown in Fig. 7 corresponds to a "normal" refrigerant flow direction (i.e. when the heat pump is operated in the normal operation mode). When the heat pump is operated in the reverse mode, the refrigerant flow direction 31 is reverted. The different operation modes of the heat pump are described further below.

### Washing liquid cooling path

As shown in Fig. 5 and 6, the dishwasher may comprise a washing liquid cooling path 43 having an inlet provided at the sump 48 being connected to a circulation pump 50, a condenser 44 and the flow manifold or preferably (and as shown in the Figures 1 to 14) the flow controller 64 (described in detail with respect to Figs. 8 to 12). An outlet of the circulation pump 50 is connected to an inlet of the condenser 44 and an outlet of the condenser 44 is connected to an inlet 66 of the flow controller 64. As further described below, the flow manifold or flow controller 64 may comprise one outlet (first, second, and/or third outlet 70, 72, 74, see below) for each spray device, wherein preferably in a normal operation mode of the heat pump, the washing liquid is heated and circulated through one or more of the spray devices into the tub 8. The flow manifold or flow controller 64 may have further outlets (see further below: fourth and fifth outlets 76, 78), wherein when operating the heat pump in a reverse mode, washing liquid is preferably circulated along the washing liquid cooling path through the fourth and/or fifth outlets 76, 78 for cooling the washing liquid and/or the tub 8 (preferably while bypassing any spray devices).

Further, a heater (not shown) for heating the washing liquid in addition or alternatively to the heating of washing liquid by the condenser may be provided. The heater is preferably arranged within or integrated in a housing of the circulation pump 50.

### Heat pump system

As shown in Figs. 5 to 7, the dishwasher 2 comprises a heat pump (i.e. heat pump system). The heat pump comprises a compressor 92, the condenser 44 and an evaporator 90. The condenser 44 has an outer or first passage 82 for guiding the washing liquid and an inner or second passage 84 for guiding the refrigerant, wherein the first and second passages 82, 84 are in heat exchanging contact with each other. As shown in Fig. 7, the condenser 44 is preferably a tube-in-tube condenser, wherein an outer tube forms the first passage 82 and an inner tube forms the second passage 84.

The compressor 92 is used for increasing the pressure of the refrigerant and for circulating the refrigerant within a refrigerant circulation circuit 83. The refrigerant is circulated through the second passage 84 of the condenser 44, the compressor 92 and the evaporator 90 in the refrigerant circulation circuit 83 (not necessarily in this order).

### Condenser

The condenser 44 is preferably arranged at a side wall 10 of the tub 8. Preferably, the condenser 44 is arranged between the side wall 10 of the tub 8 and the cabinet of the dishwasher 2. When considering the normal operation position of the dishwasher 2, the condenser 44 may be arranged at the right side wall of the dishwasher 2 as shown in Fig. 2.

The condenser 44 may extend in a vertical or substantially vertical plane. Inlets and outlets 82a, 82b, 84a, 84b of the first passage 82 and the second passage 84, respectively, may be arranged at the bottom of the condenser 44.

As shown in Figs. 5 and 7, the condenser 44 may comprise a first section 80a, a second section 80b arranged opposite to the first section 80a, and a third section 80c connecting the first and second sections 80a, 80b. The first and second sections 80a, 80b preferably each extend vertically or substantially vertically. The third section 80c preferably connects the first and second sections 80a, 80b in an arc shape, wherein the apex of the arc is the highest vertical point of the condenser 44. The arc may have an angle of 180° or substantially 180°.

As shown in Fig. 7, the second passage 84 may comprise at least two pipes arranged parallel to each other. For this the inner second passage 84 is split by a branch into two parallel passage lines wherein each a branch is provided at the inlet region and end region within the first passage 82. Thereby the heat exchanging capacity is doubled.

A plurality of spacing elements 81 may be arranged along the inner surface of the first passage 82 for receiving the second passage 84. The spacing elements 81 are adapted such that after mounting the second passage 84 within the spacing elements 81, the inner walls of the second passage 84 and the outer walls of the first passage 82 are separated or spaced from each other. Thus, a spacing between first passage 82 and second passage 84 is ensured such that liquid can pass between the inner surface of the first passage and the outer surface of the housed second passage.

The wall forming the first passage 82 may be divided into a first and second half (first and second shells). As shown in Fig. 5, the first passage 82 is divided vertically or substantially vertically in the first and second half. When mounting both halves while the second passage 84 is already arranged within one of the halves, the first and second halves form the outer tube 82 for guiding the washing liquid around the inner tube 84 while the inner tube is provided for guiding the refrigerant.

For heat exchange, the washing liquid is circulated through the first passage 82 of the condenser 44 and refrigerant through the second passage 84. After heat exchange the control unit is adapted to stop the circulation pump 50 such that the washing liquid flows out of the condenser, i.e. out of the first passage 82 due to the gravity. Thus, accumulation of dirt in the first passage 82 can be avoided.

An inlet 82a of the first passage 82 of the condenser 44 (see Fig. 7) is connected via a first fluid flow path 68a to an outlet of the circulation pump 50. A second fluid flow path 68b connects an outlet 82b of the first passage 82 to the inlet 66 of the flow controller 64.

### Refrigerant circulation circuit

As shown in Fig. 7, the refrigerant circulation circuit 83 comprises a first, second, third, fourth, fifth and sixth refrigerant circuit section 83a-f. A first refrigerant circuit section 83a connects an outlet 84b of the second passage 84 to an evaporator inlet 90a, a second refrigerant circuit section 83b connects an evaporator outlet 90b to a first inlet 86a of a switching element (switching valve) 86 (refrigerant flow changing device), a third refrigerant circuit section 83c connects a first outlet 87a of the switching valve 86 to a compressor inlet 92a, a fourth refrigerant circuit section 83d connects a compressor outlet 92b to a second inlet 86b of the switching valve 86, a fifth refrigerant circuit section 83e connects a second outlet 87b of the switching valve 86 to an inlet 84a of the second passage 84 of the condenser 44, and a sixth refrigerant circuit section 83f (being the second passage 84) connects the inlet 84a to the outlet 84b. The piping of the refrigerant circuit sections - except the piping of the condenser itself, may be provided as flexible pipes. The flexible pipes may be easily adapted to paths which are not straight without requiring mechanical bending as it is the case when using e. g. copper pipes.

An expansion device 88 (e. g. a capillary or expansion valve) may be provided within the first refrigerant section 83a connecting the outlet 84b of the second passage 84 to the evaporator inlet 90a. The expansion device 88 may be adapted to control the amount of refrigerant released into the evaporator 90.

As indicated in Fig. 5, at least one of the following components of the refrigerant circulation circuit 83 may be arranged at the basement 6 of the dishwasher 2: the compressor 92, the evaporator 90, the expansion device 88 and/or the switching valve 86. Preferably the switching valve 86 is positioned vertically, in particular perpendicular to the rotation axis of the compressor 92.

The switching valve 86 may be a valve that only guides the refrigerant from the first inlet 86a to the first outlet 87a and from the second inlet 86b to the second outlet 87b. Preferably, the switching valve 86 is configured to change the refrigerant flow direction within the refrigerant circulation circuit 83. The flow direction of the refrigerant and the flow direction of the washing liquid within the condenser 44 may be opposite to each other for improving the heat exchange.

### Evaporator

As schematically shown in Fig. 7, the evaporator 90 is preferably arranged in an evaporator tank 94. The evaporator tank 94 is preferably arranged in the basement 6 of the dishwasher, i.e. below the tub 8 (see Fig. 5). The evaporator tank 94 may be sealed by a seal extending along the edge of the opening of the evaporator tank 94 or any other sealing mechanism and is preferably closed by an evaporator tank cover. The evaporator tank cover may have a convenient form that seals the evaporator tank 94.

The evaporator tank 94 is preferably a closed tank for permanently storing a heat exchanging medium. Preferably the evaporator 90 is arranged or received inside the evaporator tank 94. The evaporator 90 is in heat exchanging contact with the heat exchanging medium for enabling heat exchange between said medium and the refrigerant flowing inside the conduits of the evaporator 90. The evaporator 90 may have e. g. a meandering structure or any other structure and may be used for warming the circulating refrigerant (and cooling the heat exchanging medium), which is the "normal" operation mode of the heat pump, or for cooling the circulating refrigerant (and warming the heat exchanging medium), which is the "reverse" operation mode of heat pump. The warmed refrigerant may be used for warming the circulating washing liquid by heat exchange in the condenser.

### Different operation modes

In the heating mode (the 'normal' operation mode of the heat pump system), within the refrigerant circulation circuit 83, starting from refrigerant outlet 84b, the refrigerant is directed by the first refrigerant circuit section 83a through the expansion device 88 to the evaporator 90. The compressor 92 arranged within the refrigerant circulation circuit 83 creates a vacuum applied to the evaporator 90. The heat exchanging medium in the evaporator tank 94 is in heat-exchanging contact with the evaporator 90. The medium is cooled down and finally changes from the liquid to the solid phase for releasing heat. The heat released heats the refrigerant in the evaporator 90 which then evaporates. The heated refrigerant as a gas phase is sucked by the compressor 92 through the second refrigerant circuit section 83b, the switching valve 86 and the third refrigerant circuit section 83c. The compressed refrigerant is passed through the fourth refrigerant circuit section 84d, the switching valve 86 and fifth refrigerant circuit section 84e to the condenser 44 through the refrigerant condenser inlet 84a. Within the condenser 44, the refrigerant and the washing liquid preferably flow in opposite directions for an improved heat exchange. In the condenser the washing liquid is heated by transferring the heat from the refrigerant to the washing liquid. From the refrigerant inlet 84a to the refrigerant condenser outlet 84, i.e. within the second passage 84, the refrigerant cools down. The washing liquid is heated in the first passage 82 from the condenser inlet 82a to the washing liquid condenser outlet 82b.

The heated washing liquid exits the condenser 44 through the washing liquid condenser outlet 82b and the washing liquid may be guided through any of the outlets of the flow controller as described above.

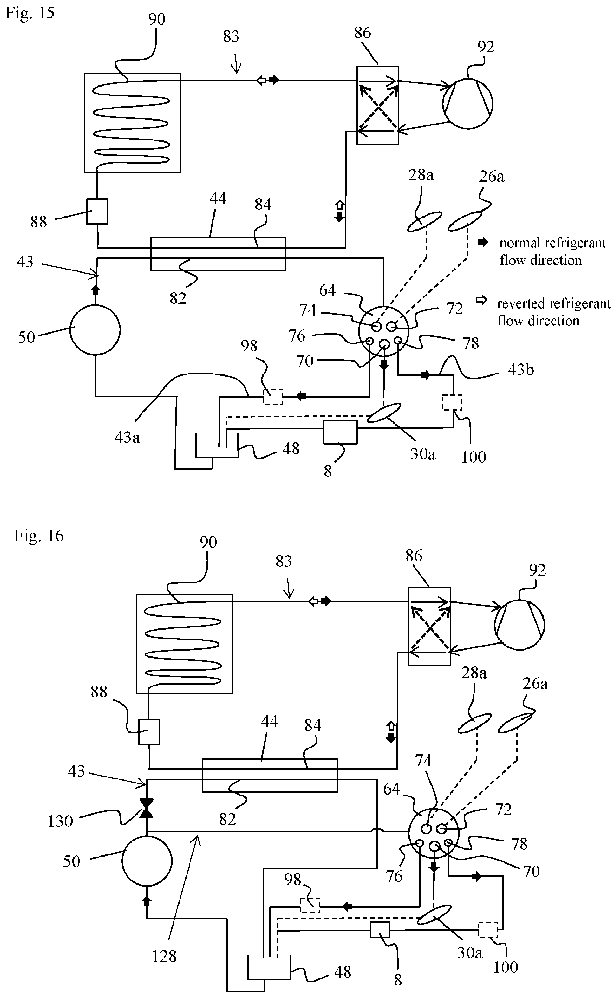

In the cooling mode for de-icing the evaporator 90 in a washing cycle and/or if in a drying phase of a washing cycle the tub is to be cooled down for improving the drying, the refrigerant flow direction is reverted as indicated by the white filled arrows in Figs. 15 to 21 (the black filled arrows indicate the normal flow direction for the heating process of the washing liquid). This is the 'reverse mode' of the heat pump system. The reversal of the refrigerant flow through the condenser 44, expansion device 88 and evaporator 90 is provided by the refrigerant flow changing device 86. In refrigerant flow reverse mode, the evaporator 90 works as a condenser and heats the heat exchanging medium within the evaporator tank 94. The condenser 44 operates as an evaporator and cools the circulated liquid (which is freshly supplied tap water and/or water from the previous rinsing). The expansion device 88 preferably is a dual-direction expansion device, e.g. a capillary that operates independent of the flow direction.

The cooled washing liquid exiting the condenser 44 (i.e. first passage 82) may be guided through extra outlet A and/or B (see below) of the flow controller 64. The supplied water may flow directly into the sump 48 via outlet A or into the sump via the tub. The washing liquid collected in the sump 48 can then be drained with the drain pump 60 along the draining circuit 59, e.g. after the de-icing of the evaporator 90 and/or cooling of the tub 8.

The flow changing device 86 has two switching states, wherein the refrigerant conveyance direction of the compressor 92 is not changed in both switching states.
a) In a first state (normal operation state for the heat pump, heating mode as described above) the evaporator 90 operates as evaporator and the condenser 44 operates as condenser. The refrigerant compressed by the compressor and coming from the compressor outlet is directed by the switching valve 86 to the condenser 44. The refrigerant from the evaporator 90 is sucked in through the switching valve 86 to the compressor inlet.
b) In a second state (refrigerant flow reversal, cooling mode as described above) the refrigerant compressed by the compressor 92 is directed by the switching valve 86 to the evaporator 90. The refrigerant exiting the condenser 44 is sucked in by the compressor 92 through the switching valve 86 being in its second switching state.

Fig. 8 is a perspective view of the sump 48 and the filtration assembly 40 of the dishwasher 2 of Fig. 3, and Fig. 9 is a perspective view of the sump 48 and the flow controller 64. The sump 48 may comprise one or more washing fluid outlets 70, 72, 74 connected to the washing liquid conduit system 22. The outlets 70, 72, 74 are preferably provided along an internal side of the sump 48 that, in use, is located proximate to the tub bottom 16. The outlets generally serve to enable the flow of washing fluid from the sump 48 to different components of the dishwasher 2. For example, the sump 48 comprises a first outlet 70 being fluidly connected to the lower spray device of the washing fluid conduit system 22, a second outlet 72 being fluidly connected to the top spray device of the washing fluid conduit system 22, and a third outlet 74 being fluidly connected to the middle spray device of the washing fluid conduit system 22.

A fourth washing fluid outlet (herein called "extra outlet A") and/or a fifth washing fluid outlet (herein called "extra outlet B) 76, 78 may be provided at the sump 48, preferably in proximity to the first, second and/or third outlets 70, 72, 74. Further, a drain outlet 79 may be provided in the sump 48 to facilitate circulation of the washing fluid in the sump 48 by operation of the circulation pump 50.

The plurality of outlets 70-78 may be arranged at the sump 48. Preferably, the flow controller 64 is integrated in the sump 48 and comprises the outlets 70-78. Washing liquid guided from the condenser 44 to the inlet 66 of the flow controller 64 and flowing through the first outlet 70 supplies washing liquid to the lower spray device. Washing liquid guided from the condenser 44 to the inlet 66 of the flow controller 64 and flowing through the second outlet 72 supplies washing liquid to the top spray device. Washing liquid guided from the condenser 44 to the inlet 66 of the flow controller 64 and flowing through the third outlet 74 supplies washing liquid to the middle spray device. In other embodiments, outlets 70, 72, 74 may enable the supply of washing fluid from sump 48 to any spray devices and/or any other component of washing fluid conduit system 22 of the dishwasher 2. Preferably, the washing liquid is supplied into the tub 8 via the first, second and/or third outlet 70, 72, 74 when the heat pump is operated in the normal operation mode in which the washing liquid is heated.

As shown in Fig. 9, sump 48 is unitary and is formed by a single-piece construction. The functioning of the flow controller 64 is described in detail with respect to Fig. 12.

### Sump nozzle/tub nozzle

As shown in Figs. 8 and 9, the extra outlet A 76 is fluidly connected to a tub outlet, preferably a tub nozzle 100, which is adapted to supply washing liquid into the interior of the tub 8 at the tub bottom region. Extra outlet B 78 is preferably fluidly connected to a sump outlet, preferably a sump nozzle 98, being adapted to directly supply washing liquid back into the sump 48, preferably avoiding that the circulated liquid is guided through the tub.

The washing liquid cooling path 43 may comprise a first cooling branch 43a in which washing liquid exiting the condenser 44 (i.e. first passage 82) is guided through the extra outlet A 76 and via the sump nozzle 98 back into the sump 48, and/or a second cooling branch 43b in which washing liquid exiting the condenser 44 (i.e. first passage 82) is guided through the extra outlet B 78 and via the tub nozzle 100 into the tub 8, wherein the washing liquid flows back to the sump 48 via the tub 8.

The washing liquid is preferably guided through extra outlet A 76 and/or extra outlet B 78 when the heat pump is operated in the reverse mode. During the reverse mode, the washing liquid is cooled in the condenser 44, in particular in the first passage 82, and the cooled washing liquid is guided directly to the sump 48 via outlet A 76 and/or into the interior of the tub 8 via outlet B 78. The reverse mode of the heat pump enables regeneration of the heat exchanging medium in the evaporator tank 94, i.e. deicing of the heat exchanging medium and/or enables, during a drying phase, cooling of the tub 8 and/or the air within the tub resulting in an improved drying efficiency.

When e.g. washing liquid is guided along the first cooling branch 43a, the washing liquid does not enter the interior of the tub 8 and thus does not substantially affect the air temperature in the interior of the tub 8. I.e. the cooled washing liquid does not cool the tub 8 and/or the air within the tub 8 when the heat pump is operated in the reverse mode and the washing liquid is guided along the first cooling branch 43a.

Preferably, during a drying phase of a washing cycle, the washing liquid is guided along the second cooling branch 43b, wherein the cooled washing liquid cools the tub 8 and/or the air within the tub such that the humidity of the air condensates, and thus the drying process is improved. In this case, the drying process is improved in addition to the regeneration of the heat exchanging medium in the evaporator tank 94. When circulating the washing liquid along the second cooling branch 43b, the tub nozzle 100 is preferably adapted such that the washing liquid supplied into the tub interior does not contact the articles therein (thus articles are not cooled by the washing liquid).

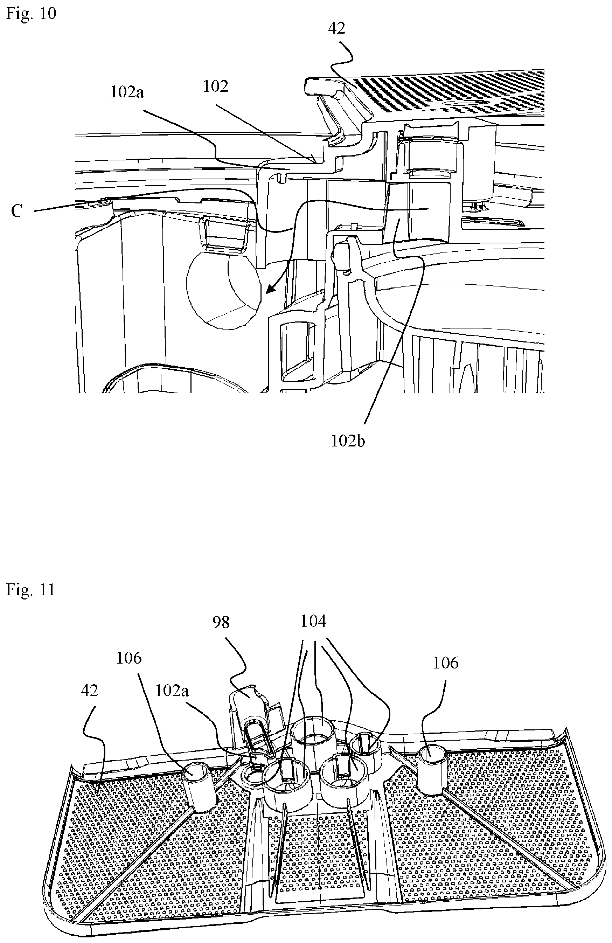

The filtration assembly 40 may comprise a cover element 42. The cover element 42 is preferably adapted to cover at least a portion of the sump. At least a portion of the cover element 42 is arranged above the flow controller 64 covering and redirecting the respective outlets 70-78 of the flow controller 64. As shown in the bottom view in Fig. 11, the cover element 42 comprises inlets which are aligned with the outlets of the flow controller 64. One inlet connects the extra outlet A 78 to the sump nozzle 98 and one inlet connects the extra outlet B 76 to the tub nozzle 100. Further, the cover element 42 comprises one outlet for each outlet 70, 72, 74 for fluidly connecting to the spray devices such that the washing liquid can pass from the outlets 70, 72, 74 through the cover element 42 to the washing liquid conduit system and the respective spray device.

The cover element 42 has a portion formed as a filter adapted to filter washing liquid when it flows from the interior of the tub 8 through the filter to the sump 48.

As shown in Fig. 8, the cover element 42 may comprise a hub 96 arranged at the upper side of the cover element 42 and extending vertically or substantially vertically from the cover element 42. The hub 96 is adapted to connect the first outlet 70 to the lower spray device (not shown).

The tub nozzle 100 and/or the sump nozzle 98 are at least partially integrated in the cover element 42. Preferably, the cover element 42 and the sump nozzle 98 and/or the tub nozzle 100 are formed in a single piece, preferably fabricated from a plastic material. The sump nozzle 98 is preferably arranged at a lower surface of the cover element 42 and/or the tub nozzle 100 is preferably arranged at a top surface of the cover element 42.

As shown in Fig. 11, the cover element 42 may comprise fixation element apertures 106, and sump attachments 104 arranged at a lower surface of the cover element 42 when considering the mounting normal mounting position. Fixation element apertures 106 are preferably sized and shaped to accept fixation elements (not shown) to connect the cover element 42 to the sump 48. Sump attachments 104 are preferably sized and shaped to fit over the respective outlets 70, 72, 74, 76, 78 of the sump 48 to connect the outlets 70, 72, 74, 76, 78 to the respective spray arms of the water conduit system and/or to the sump nozzle 98 and/or the tub nozzle 100 of the dishwasher, as described herein. The connection between the sump attachments 104 and the outlets 70, 72, 74, 76, 78 is preferably formed as a sealed connection.

The sump nozzle 98 is attachable to the extra outlet A 76 with a connection element (not specifically shown). Preferably the sump nozzle 98 simply fits the profile of the extra outlet A 76 by interlocking. The sump nozzle 98 is attachable to the extra outlet A 76 such that the washing fluid supplied to the extra outlet A 76 from the dishwasher tub 8 and sump 48 follows the path of arrow C (shown in Fig. 10) back into the sump 48.

When the cover element 42 is attached to the outlets, a flow channel 102 is preferably formed between the outlet A 76 and the sump nozzle 98. In particular, the bottom of the cover element 42 includes a first part 102a of the flow channel 102 which is preferably integrated in the cover element 42, and a second part 102b of the flow channel 102 which is preferably integrated in the sump 48 at the extra outlet A 76. The first part and the second parts 102a, 102b are preferably configured such that when the cover element 42 is mounted at the sump 48, the first and second parts 102a, 102b form the flow channel 102 for guiding washing liquid from the extra outlet A via the sump nozzle 98 into the sump 48. Preferably, the first part 102a is formed in a single piece with the cover element 42 and/or the second part 102b is formed in a single piece with the sump 48.

The extra outlet A 76 may extend vertical or substantially vertical from the sump 48, and a side wall of the outlet A 76 may comprise an aperture fluidly connecting the outlet A 76 to the flow channel 102.

Alternatively to the flow channel 102 comprising the first and second parts 102a, 102b, the flow channel 102 may be formed as a closed channel integrated in the cover element 42, wherein the inlet is adapted to be connected to the extra outlet A 76 and the outlet is forming the sump nozzle 98.

The tub nozzle 100 is attachable to the extra outlet B 78 with a connection element (not specifically shown), preferably the tub nozzle 100 simply fits the profile of the extra outlet B 78 by interlocking. The tub nozzle 100 is attachable to the extra outlet B 78 such that the washing fluid supplied to outlet B 78 is guided into the interior of the tub 8 via the tub nozzle 100. The outlet of the tub nozzle 100 is preferably arranged such that the washing fluid exiting the tub nozzle 100 does not contact the articles in the dishwasher 2.

### Flow controller

Fig. 12 is an exploded view of the sump 48 and the flow controller 64 of Fig. 9. Sump 48 includes a disk portion 110 formed within an external side of the sump 48. The flow controller 64 includes a disk 112, CAM disk 114, switch (not specifically shown), and motor 116. Disk portion 110 of sump 48 is sized and shaped to receive disk 112, CAM disk 114, switch, and motor 116. The motor 116 is configured to rotate the disk 112 relative to the washing fluid outlets 70, 72, 74, 76 and 78. The relative movement between the disk 112 and sump outlets 70-78 will be described in further detail herein. However, generally, in the exemplary embodiment, the control unit may signal to the switch and motor 116 to rotate CAM disk 114 at the intervals and times consistent with the dishwasher cycle and as a result, the disk 112 is selectably moved relative to the sump 48 and outlets 70-78.

The disk 112 may comprise a plurality of apertures 113 arranged for selectively closing and opening the plurality of washing fluid outlets 70, 72, 74 and the extra outlet A 76 and/or the extra outlet B 78 during rotation of the disk 112. Preferably, the motor 116 is adapted to align at least one of the plurality of apertures 113 of the disk 112 with at least one of the washing fluid outlets 70, 72, 74 and the extra outlet A 76 and/or the extra outlet B 78 such that washing liquid is permitted to pass through the aligned outlet(s).

A housing 118 of the flow controller 64 preferably fits around or envelops the disk 112 when the disk 112 is positioned within disk portion 110 of sump 48. In use, the disk 112 is located between the housing 118 and the sump 48. CAM disk 114, switch, and motor 116 are located within an internal compartment (not specifically shown) of the housing 118 such that at least the CAM disk 114 is in contact with the disk 112 through the housing 118. In other embodiments, the housing, the CAM disk, the switch, and the motor may have a different configuration. For example, the CAM disk, switch, and motor may be immediately adjacent to the disk 112 rather than separated by a portion of the housing body as presently disclosed. For example, the housing 118 is below the CAM disk 114, the switch, and the motor 116.

### Different flow rates

As shown in Figs. 13 and 14, in addition to the above circulation through the sump and/or tub nozzle 98, 100 or as an alternative, if e.g. no sump nozzle 98 is provided, washing liquid can be supplied in the reverse mode of the heat pump into the interior of the tub 8 through the above described tub nozzle 100 with a reduced flow rate 120 or with a higher flow rate 122 (see Fig. 13). Alternatively or additionally, e.g. when no sump nozzle 98 and/or no tub nozzle 100 is provided, the washing liquid can be supplied with a reduced flow rate through the lower spray device 30a (see: Fig. 14 in which arrows indicate the washing liquid flow) into the interior of the tub 8.

In case of the lower spray device 30a, a normal flow rate through the lower spray device 30a is preferably a flow rate in which the articles above the lower spray arm 30a are contacted by the washing liquid. The reduced flow rate is a flow rate which is reduced compared to the normal flow rate and adapted such that the washing liquid does not contact the articles when applying the reduced flow rate through the lower spray device.

In case of the tub nozzle 100, the higher flow rate (and thus also the reduced flow rate which is lower than the higher flow rate) for circulating the washing liquid through the tub nozzle 100 is adapted such that the water cannot contact the articles.

Preferably, the bottom of the tub 8 comprises a first region 124 surrounding/covering the sump 48, and a second region 126 surrounding the first region 24. When applying the reduced flow rate through the tub nozzle 100, the washing liquid is conveyed through the tub nozzle to the first region 124, and when applying the higher flow rate through the tub nozzle 100, the washing liquid is conveyed through the tub nozzle 100 the washing liquid is also conveyed to the second region 126. On the other hand, when applying the reduced flow rate through the lower spray device 30a, the washing liquid is conveyed to the first and second regions 124, 126.

The second region 126 is more distant from the sump 48 than the first region 124. When applying the higher flow rate, the washing liquid can exchange heat with the interior of the tub 8 and/or with the hot air within the tub, preferably during a drying phase. The majority of the washing liquid preferably enters the first region 124 at the reduced flow rate and the second region 126 at the higher flow rate. When applying the higher flow rate, the supplied washing liquid preferably flows from the second region 126 through the first region 124 of the tub bottom 16, back into the sump 48. Since the second region 126 is more distant from the tub nozzle 100 than the first region 124, when applying the higher flow rate, the washing liquid has more time and a longer path for heat exchange with the air within the tub 8 and/or the tub 8 until the washing liquid flows back into the sump 48. E.g. when applying the higher flow rate, the washing liquid is sprayed out of the tub nozzle with a length of at least 1.5, 1.7, 1.9, 2.0, 2.2 or 2.5 times of the spray length when applying the reduced flow rate.

When applying the reduced or the higher flow rate through the tub nozzle 100 or the reduced flow rate through the lower spray device 30a and operating the heat pump in the reverse mode, the heat exchanging medium in the evaporator tank 94 can be regenerated. In addition, when applied during a drying phase, the drying efficiency can be improved when cooled washing liquid is supplied with the higher flow rate through the tub nozzle 100 (compared to the reduced flow rate through the tub nozzle 100) and/or the reduced flow rate through the lower spray device 30a into the interior of the tub 8 for cooling down the interior of the tub 8.

The reduced flow rate through the tub nozzle 100 is preferably applied during a washing phase and/or a cold rinse and/or a hot rinse and/or at the beginning of a drying phase of the washing cycle, and/or the higher flow rate is preferably applied during a drying phase of the washing cycle, in particular after the reduced flow rate has been applied during the drying phase.

The reduced flow rate through the lower spray device 30a is preferably applied during the washing phase and/or the cold rinse and/or the hot rinse and/or during the drying phase of the washing cycle.

### Different heat pump and washing liquid flow path arrangements

In the following Figs. 15 to 21, the reverted refrigerant flow direction for cooling the washing liquid is indicated by the white filled arrows and the normal refrigerant flow direction for heating the washing liquid is indicated by the black filled arrows.

The heat pump and washing liquid flow path arrangement, i.e. the refrigerant circulation circuit 83 and the washing liquid cooling path 43 of the dishwasher 2 shown in Fig. 1 to 14 is schematically shown in Fig. 15.

The flow controller 64 comprises the outlet A 76 connected to the sump 48 via the first cooling branch 43a, in particular the sump nozzle 98, and comprises the outlet B 78 connected to the tub 8 via the second cooling branch 43b, in particular the tub nozzle 100, for supplying cooled washing liquid in a reverse mode of the heat pump. Further, the flow controller 64 comprises the first, second and third outlets 70, 72, 74, wherein the first outlet 70 is connected to the lower spray device 30a, the second outlet 72 is connected to the top spray device 26a and the third outlet 74 is connected to the middle spray device 28a.

Although the flow controller 64 is shown with the three outlets 70, 72, 74 for the spray devices, it is understood that only one or two of the outlets can be present in any of the embodiment disclosed herein. Similar, only one of the outlets A and B may be present in any of the embodiment disclosed herein.

In the following Figs. 16 to 21, heat pump and washing liquid flow path arrangements which differ from the heat pump and washing liquid flow path arrangement shown in Fig. 1 to 14 and illustrated by the schematic view in Fig. 15 are shown. Only the differences between the heat pump and washing liquid flow path arrangements of Figs. 16 to 21 with respect to the heat pump and washing liquid flow path arrangement of Fig. 15 are described. All other features which are described with respect to the dishwasher 2 of Figs. 1 to 15 are also applicable to the arrangements shown in Figs. 16 to 21.

As shown in Fig. 16, the washing liquid cooling path 43 comprises the inlet at the sump 48, the condenser 44, i.e. the first passage 82, and an outlet at the sump 48. In contrast to the heat pump arrangement of Fig. 15, the washing liquid cooling path 43 is not guided through the flow controller 64. Instead a separate circulation flow path 128 connecting an or the inlet of the washing liquid cooling path 43 at the sump 48 to the flow controller 64 is provided. The flow controller 64 has the same outlets 70-78 as the flow controller 64 of Fig. 15 with the same connections.

In this case, the washing liquid is only guided through the condenser 44 when heat exchange is required. Thus, the pump energy consumption and soiling of condenser can be reduced since the washing liquid is not always guided through the condenser 44.

Preferably, the washing liquid cooling path 43 and the circulation flow path 128 may have an at least partially common flow path downstream of the circulation pump 50. Thus, the same circulation pump 50 can be used for supplying washing liquid along the washing liquid cooling path 43 and/or the circulation flow path 128. The flow path branches downstream of the pump 50 into the washing liquid cooling path 43 and the circulation flow path 128. A control element 130 may be arranged at the branching point or downstream of the branching point in at least one of the washing liquid cooling path 43 and/or the circulation flow path 128. The control element 130 is preferably configured such that when the control unit controls the control element 130, the washing liquid can be circulated along the washing liquid cooling path 43 and/or the circulation flow path 128. Alternatively, the washing liquid cooling path 43 and the circulation flow path 128 may be completely separated from each is separately connected to a circulation pump which is in turn connected to the sump.

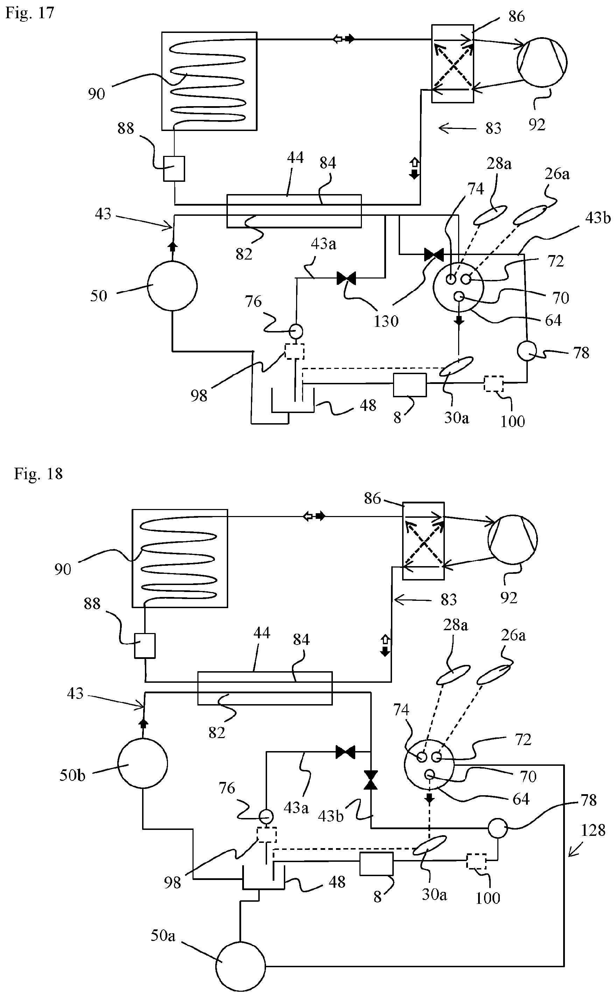

Fig. 17 shows another washing liquid flow path arrangement which is different from the arrangement shown in Fig. 15 in that the outlets A and B 76, 78 are not provided at the flow controller 64. The flow controller connected to the condenser 44 (only) comprises the outlets connected to the spray devices 26a, 28a, 30a. The flow path downstream of the condenser 44 and upstream of the flow controller 64 may branch off into the first cooling branch 43a being connected to an outlet 76 and the second cooling branch 43b being connected to an outlet 78. Preferably, in each of first and second cooling branches 43a, 43b a control element 130 may be arranged which is adapted to enable or block the washing fluid flow along the respective cooling branches 43a, 43b. Preferably, if the control unit controls the elements 130 to circulate washing liquid through outlet 76 and/or 78, the control unit simultaneously controls the flow controller 64 such that no washing fluid can pass through any of the outlets 70, 72, 74, e.g. in that the disk 112 is rotated to a position where it blocks outlets 70, 72, 74.

In the washing liquid flow path arrangement shown in Fig. 18 the washing liquid cooling path 43 comprises the inlet at the sump 48, a second circulation pump 50b, the condenser 44, i.e. the first passage 82, and the outlets 76 and/or 78. In contrast to the flow path arrangement of Fig. 15, the washing liquid cooling path 43 is not guided through the flow controller 64 and the outlets 76 and/or 78 are provided separate from the flow controller 64. A separate circulation flow path 128 having an or the inlet at the sump 48, a first circulation pump 50a, and the flow controller 64 is provided. In this case, the flow controller 64 only comprises the outlets 70, 72, 74 connected to the spray devices 26a, 28a, 30a for supplying washing liquid into the tub 8.

By separating the washing liquid cooling path 43 having the first and second cooling branches 43a, 43b and the circulation flow path 128 each having its own circulation pump, the size and/or power of second circulation pump 50b can be smaller than the first pump 50a since the second circulation pump 50b has not to be capable of supplying washing liquid to any of the spray devices. Thus, the second pump 50b has less flow resistance resulting and less energy consumption compared to the first pump 50a.

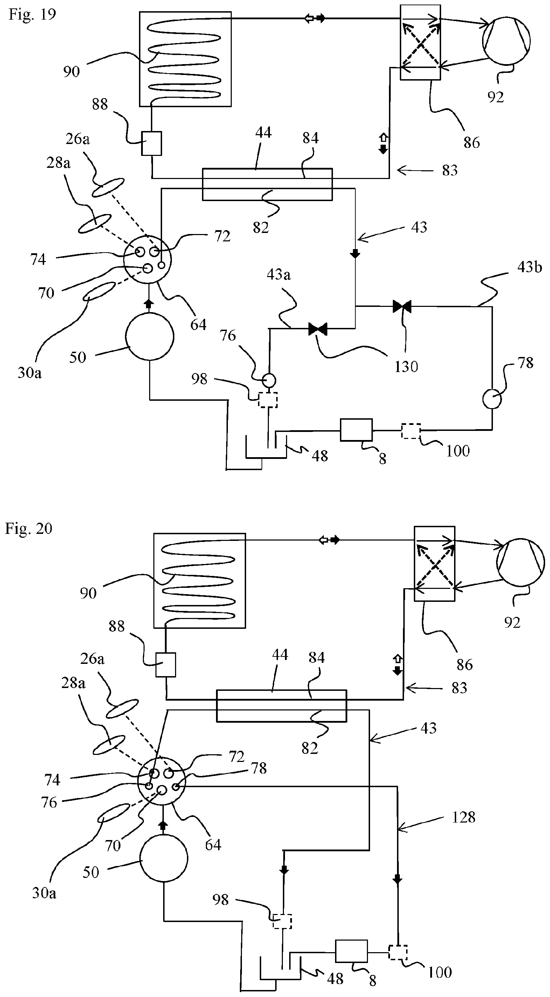

In the washing liquid flow path arrangement shown in Fig. 19 the flow controller 64 is arranged upstream of the condenser 44 (whereas in Fig. 15 flow controller is downstream of condenser 44), wherein the outlet at the sump 48 is connected to the inlet of the flow controller 64 via the circulation pump 50. The flow controller 64 may comprise the one or more outlets 70, 72, 74 being connected to the respective spray devices. The flow controller 64 may comprise the further outlet 76 which is connected to an inlet of the condenser 44 (at the first passage 82), wherein the flow path downstream of the condenser 44 preferably branches off into the first and second cooling branches 43a, 43b.

In the washing liquid flow path arrangement shown in Fig. 20 the flow controller 64 is arranged upstream of the condenser 44 (whereas in Fig. 15 flow controller is downstream of condenser 44), wherein the inlet of the washing liquid cooling path 43 at the sump 48 is connected to the inlet of the flow controller 64 via circulation pump 50. The flow controller 64 may comprise the one or more outlets 70, 72, 74 being connected to the respective spray devices. The flow controller 64 may further comprise the outlet 76 being connected to the inlet of the condenser 44, wherein the outlet of the condenser 44 is connected to the sump, preferably the sump nozzle 98, forming the washing liquid cooling path 43. The flow controller may further comprise the outlet 78 which is connected to the tub outlet, preferably connected to the tub nozzle 100 forming the circulation flow path 128. In this case, the washing liquid is only guided through the condenser (and thus can be cooled in the reverse mode of the heat pump) when the washing liquid in the flow controller 64 is guided through the outlet 76.

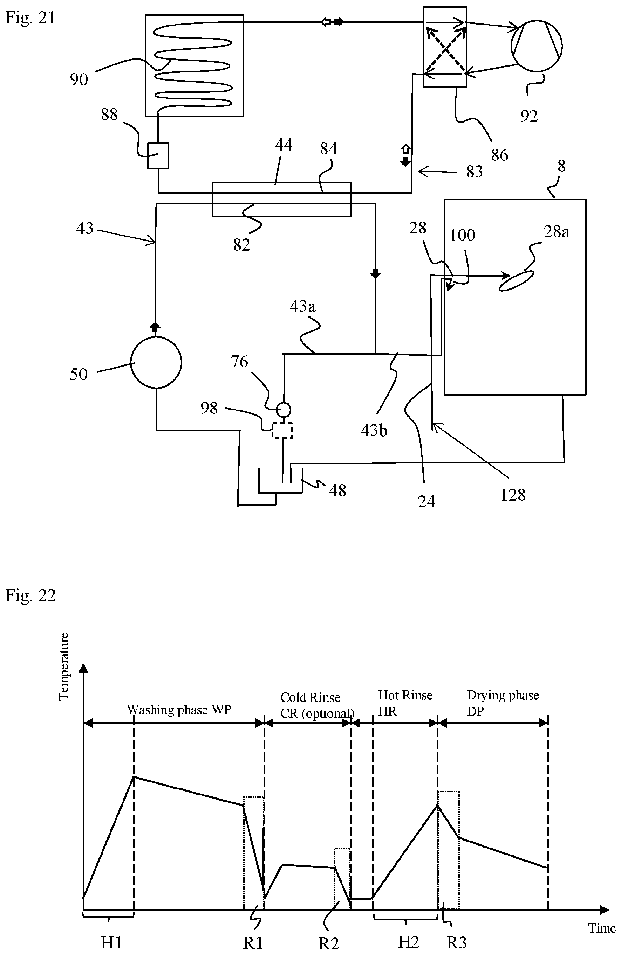

The heat and washing liquid flow path arrangement shown in Fig. 21 is very similar to the arrangement shown in Fig. 18 wherein the washing liquid cooling path 43 (preferably having the first and/or second cooling branches 43a, 43b) is separate from the circulation flow path 128. For simplicity, only one part of the circulation flow path 128 showing the connection to the middle spray device 28a is shown. In contrast to Fig. 18, the flow controller outlet 78, in particular the tub nozzle 100 is not arranged at the sump, but is arranged at or in proximity to a side wall of the tub 8. Preferably, the flow controller outlet 78 is arranged at the connector 28 to the middle spray device 28a such that the washing liquid supplied through the outlet 78 flows along the inner wall of the tub 8 to the bottom of the tub 8 and from there back to the sump 48. The washing liquid released from nozzle 100 is directed to and along the sidewall (as an example here the inner tub back wall) such that it does not come in contact with the articles stored in the tub.

In the following examples are described how and when to operate the dishwasher in the reverse mode of the heat pump during a washing cycle and how during the reverse mode the washing liquid is circulated through the outlets A and/or B and/or through the lower spray device with reduced flow rate applied.

### Regeneration during a washing cycle in dependency of different heating strategies

Fig. 22 shows a washing cycle having the following phases: a wash phase WP, optional a cold rinse phase CR, a hot rinse phase HR (in which in particular washing liquid with rinse aid is used) and a drying phase DP for drying the articles in the dishwasher 2.

The washing phase WP comprises a first heating section H1 and the hot rinse phase comprises a second heating section H2, wherein in each of the heating sections H1, H2 the washing liquid may be heated by operating the heat pump in the normal mode and/or by operating the electrical heater. As described above the electrical heater is preferably arranged within the sump 48 for heating the washing liquid.

A first regeneration section R1 may be provided in the washing phase WP, preferably at the end of the washing phase WP, and/or a second regeneration section R2 in the cold rinse phase CR - if provided, preferably at the end of the cold rinse phase CR. Additionally or alternatively a third regeneration section R3 can be provided in the hot rinse phase HR, preferably at the end of the hot rinse phase HR, or at the beginning of the drying phase DP as in the example of Fig. 22. In each of the regeneration sections R1, R2, R3, the heat pump is operated in the reverse mode such that the heat exchanging medium is heated and thus regenerated. Preferably, the heat pump is operated in the reverse mode before the washing liquid is drained at the end of the respective phase, or - if applicable - at the end of the respective regeneration section.

In dependency of which type of heating was used in the preceding washing liquid heating phase or phases, the heat pump is operated in the reverse mode for extracting heat from the heated washing liquid or the heat pump is not operated.

Further, operating the heat pump in the reverse mode may depend on a quantity of articles to be washed, a quantity of washing liquid within the dishwasher, a washing liquid temperature and/or on a program selected by a user at the dishwasher or by a device connected to the dishwasher such as a smartphone.

Preferably, in/during the regeneration sections R1 to R3, the heat pump is operated in the reverse mode and the washing liquid is circulated along the washing liquid cooling path 43 (see Figs. 15 to 21) from the inlet of the washing liquid cooling path 43 at the sump 48 through the flow controller outlet A 76 back to the sump 48.

Alternatively, as described with respect to Figs. 13 and 14, the washing liquid may be circulated in/during the regeneration sections R1 to R3 with the reduced flow rate through the lower spray device 30a or the washing liquid may be circulated with the reduced flow rate through the tub outlet, preferably the tub nozzle 100.

In the following, examples for combinations of regeneration sections R1 to R3 in dependency of different heating strategies in the first and second heating sections H1 and H2 are shown:

| **Phase of washing cycle:** | **Washing phase WP** | | | **Cold Rinse CR (optional)** | | **Hot Rinse HR** | | **Drying Phase DP** |
|---|---|---|---|---|---|---|---|---|
| **Examples:** | **Heating H1** | | **R1** | **Provided (yes/no)?** | **R2** | **Heating H2** | | **R3** |
| | **Electrical heating** | **Heat pump heating** | | | | **Electrical heating** | **Heat pump heating** | |
| **1** | no | yes | yes | yes | yes | no | yes | yes |
| **2** | no | yes | yes | no | no | no | yes | yes |
| **3** | yes | no | no | yes | no | yes | no | no |
| **4** | yes | no | no | yes | no | no | yes | yes |
| **5** | no | yes | yes | yes | yes | yes | no | yes |
| **6** | no | yes | no | yes | no | yes | no | yes |
| **7** | yes | yes | no | yes | no | yes | yes | yes |

For example, if in the first and/or second heating sections H1, H2, the washing liquid is only heated by operating the electrical heater, no heat is extracted from the heat exchanging medium in the evaporator 90 during the heating sections H1, H2 and thus no regeneration in the regeneration sections R1 and/or R2 may be necessary. In addition, a regeneration in the regeneration section R3, i.e. at the end of the hot rinse phase or at the beginning of the drying phase, may not be necessary (see Example 3) since no heat was extracted from the heat exchanging medium.

### Drying phase of the washing cycle

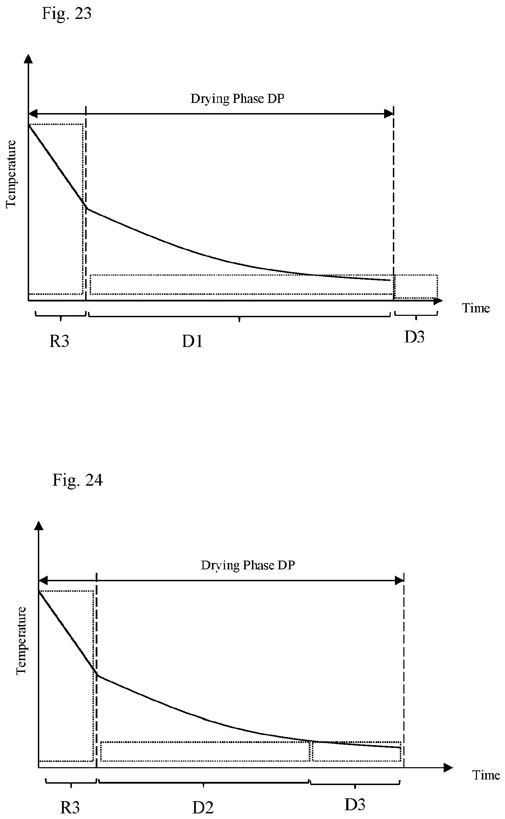

Fig. 23 shows a detailed view of a drying phase as shown in Fig. 22. The drying phase DP comprises a drying section D1 in which the heat pump is operated in the reverse mode and the cooled washing liquid is preferably circulated along the washing liquid cooling path 43 (see Figs. 15 to 21) from the inlet of the washing liquid cooling path 43 at the sump 48 through the flow controller outlet B 78 into the interior of the tub 8 for cooling down the tub 8, and from there back into the sump 48 via the tub 8. By cooling down the tub 8 with the cooled washing liquid the air within the tub is cooled and thus the humidity within the air condensates when contacting the cooled tub interior and the drying of the washed articles is improved.

### Air circulation during first drying section D1

If the dishwasher comprises the internal air circulation path 20, the air within the tub is preferably circulated during the drying phase along the internal air circulation path 20 by activating the blower 20c (see Fig. 3). Preferably, the blower 20c is activated during the first drying section D1, i.e. during operation of the heat pump in the reverse mode and during the circulation of the washing liquid through the tub 8, more preferably after the circulation of the washing liquid through the sump in the section R3 (if provided) is finished. During the first drying section D1, when the washing liquid is circulated through the interior of the tub 8, the heat pump, the compressor 92 of the heat pump, and/or the blower 20c of the internal air circulation path 20 are preferably operated continuously or pulsed and/or the compressor 92 and the blower are operated at least partially simultaneously. The air at the bottom can be cooled by the circulation of the washing liquid through the tub and the cooled air can be circulated to the top region of the tub by the internal air circulation path 20. Hot air from the top is circulated towards the bottom region and can be cooled by the cooled washing liquid introduced into the tub interior. Thus, the internal air circulation assists the cooling of the air within the tub and thus the drying of the articles.

### Door opening after drying phase

In case of the internal air circulation path 20, a third drying section D3 is preferably provided. As shown in Fig. 23, the third drying section D3 is preferably not part of the drying phase DP, but is preferably executed after the end of the drying phase. In particular, in drying section D3, a tub opening is provided. Thus, the remaining warm air can flow out of the tub interior and thus the tub interior cools down. Thereby, the removal of the humidity from the articles in the tub is further improved. The tub opening may for example comprise an opening of the door 18 of the dishwasher. In particular, the door 18 of the dishwasher 2 may be opened automatically after the drying phase DP is finished. Alternatively, the tub opening may comprise any flow connection from the tub interior to the ambient such that the warm air within the tub can flow out of the dishwasher. Preferably the door opening or air exhaustion to the ambient is provided after a previous condensation phase using e.g. R3 and/or D1 and/or D2.

### Drying phase without internal air circulation path

Fig. 24 shows another drying phase DP. This configuration is preferably applied when the dishwasher does not comprise the air circulation flow path 20. The drying phase DP of Fig. 24 comprises a second drying section D2 which preferably corresponds to the first drying section D1 of Fig. 23 as described above except that no air is circulated within the tub interior. Thereby, by circulating the cooled washing liquid, the air within the tub and the tub interior is cooled and thus the humidity within the air condensates when contacting the cooled tub interior and the drying of the washed articles is improved.

In contrast to the drying phase DP shown in Fig. 23 in which the third drying section D3 is executed after the drying phase DP is finished, the third drying section D3 of Fig. 24 is executed during the drying phase DP. In this case, the drying section D3 is part of the drying phase DP. The third drying section D3 is preferably provided after the second drying section (i.e. circulation of the washing liquid through the tub) is finished. Other features described with reference to the third drying section D3 of Fig. 23 also apply to the third drying section D3 of Fig. 24. For example, the door 18 of the dishwasher is opened during the third drying section D3. Thus, the warm air, which already cooled down and has lost a significant portion of its humidity, can flow out of the tub interior and thus the tub interior further cools down and the remaining humidity is reduced. Thereby, the condensation of the humidity in the tub is improved.

### Regeneration section R3 during drying phases of Figs. 23 and 24

The drying phases DP of Figs. 23 and 24 may further comprise the regeneration section R3 preceding the drying section D1 (or drying section D2 in case of Fig. 24). The regeneration section R3 may be provided before the washing liquid is circulated through the tub 8 in the drying section D1 (or before the drying section D2 in case of Fig. 23). As described above, in the regeneration section R3, the heat pump is operated in the reverse mode and the washing liquid is circulated along the washing liquid cooling path 43 (see Figs. 15 to 21) from the inlet of the washing liquid cooling path 43 at the sump 48 through the outlet A 76 back to the sump 48. Thus, section R3 may be used for first cooling the washing liquid in the sump and the cooled washing liquid may then be circulated in the subsequent drying section D1 (or drying section D2 in case of Fig. 24) through the tub 8 for cooling down the tub 8. Thereby the condensation of humidity in the tub is more efficient due to the temperature difference between tub interior and the already cooled-down liquid circulated through the tub.

### Different flow rates during regeneration section R3 and subsequent drying section

As described with respect to Figs. 13 and 14, during the regeneration section R3, the washing liquid may be circulated with the reduced flow rate through the tub outlet (tub nozzle 100) and with the higher flow rate through the tub nozzle 100 during the subsequent drying section D1 (or D2 in case of Fig. 24). Thus, the washing liquid can first be circulated with the reduced flow rate through the tub nozzle 100 for cooling the washing liquid and the cooled washing liquid can then be circulated in the subsequent drying section D1 (or D2) with the higher flow rate through the tub nozzle 100. When applying the higher flow rate, the washing liquid has more time and a longer path for heat exchange with the air within the tub 8 and/or the tub 8 until the washing liquid flows back into the sump 48. Thereby the condensation of humidity in the tub is more efficient due to the temperature difference between tub interior and liquid circulated through the tub.

Alternatively, the washing liquid may be circulated with the reduced flow rate through the lower spray device 30a during the regeneration section R3 and the subsequent drying section D1. Thus, the washing liquid and the tub is cooled and condensation of humidity is improved while the articles are not wetted by the circulated liquid.

In the following, examples for combinations of regeneration section R3 and drying sections D1 to D3 for a dishwasher with and without an internal air circulation are shown:

| | | | **Drying Phase** | |
|---|---|---|---|---|
| **Examples:** | **R3** | **D1** | **internal air circulation** | **D3 (Automatic Door Opening yes/no)** |
| **1** | yes | yes | yes | no |
| **2** | not provided | yes | yes | no |
| **3** | no washing liquid circulation | yes | yes | no |
| **4** | heat pump reverse | yes | yes | yes |

| | **R3** | **D2** | **internal air circulation** | **D3 (Automatic Door Opening yes/no)** |
|---|---|---|---|---|
| **5** | yes | ves | no | ves |
| **6** | not provided | ves | no | ves |
| **7** | no washing liquid circulation | yes | no | yes |

Examples 1 to 4 are examples for the drying phase DP shown in Fig. 23 comprising the first drying section D1 and in which the dishwasher comprises the internal air circulation path 20. Examples 5 to 7 are examples for the drying phase DP shown in Fig. 24 comprising the second drying section D2 and in which the dishwasher does not comprise the internal air circulation path 20.

### Reference Numeral List

- 2: Dishwasher
- 4: control panel
- 6: basement
- 8: tub
- 10: side wall (tub)
- 14: top wall (tub)
- 16: tub bottom
- 18: door
- 20: internal air circulation path
- 20a: inlet
- 20b: outlet
- 20c: blower
- 22: washing liquid conduit system
- 24: delivery conduit
- 26: connector to top spray device
- 26a: top spray device / top spray arm
- 28: connector to middle spray arm
- 28a: middle spray device / middle spray arm
- 30: connector to lower spray arm
- 30a: lower spray device / lower spray arm
- 31: refrigerant flow direction
- 32: washing liquid flow direction
- 40: filtration assembly
- 42: cover element
- 43: washing liquid cooling path
- 43a, 43b: first / second cooling branch
- 44: condenser
- 46: fresh water tank assembly
- 46a: connection to tub
- 48: sump
- 50, 50a, 50b: (first / second) circulation pump
- 52: softener assembly
- 54a: outlet to salt container
- 54b: outlet to resin container
- 56: flow connection to sump
- 58: flow meter
- 59: draining circuit
- 60: drain pump
- 62a-c: first / second / third draining path sections
- 64: flow manifold / flow controller
- 66: inlet of flow controller
- 68a, 68b: first / second fluid flow path
- 70: first washing fluid outlet
- 72: second washing fluid outlet
- 74: third washing fluid outlet
- 76: fourth washing fluid outlet / extra outlet A
- 78: fifth washing fluid outlet / extra outlet B
- 79: drain outlet
- 80a-c: first, second, third section of condenser
- 81: spacing element
- 82: first passage (for washing liquid, e.g. outer tube of condenser)
- 82a: inlet of first passage
- 82b: outlet of first passage
- 83: refrigerant circulation circuit
- 83a-f: first, second, third, fourth, fifth, sixth refrigerant circuit section
- 84: second passage (for refrigerant, e.g. inner tube of condenser)
- 84a: inlet (outlet) of second passage
- 84b: outlet (inlet) of second passage
- 86: refrigerant flow changing device / switching valve
- 86a, 86b: first/second inlet of refrigerant flow changing device
- 87a, 87b: first/second outlet of refrigerant flow changing device
- 88: expansion device
- 90: evaporator
- 90a: evaporator inlet
- 90b: evaporator outlet
- 92: compressor
- 92a, b: inlet / outlet of compressor
- 94: evaporator tank96 hub for lower spray device
- 98: sump nozzle
- 100: tub nozzle
- 102: flow channel
- 102a: first part
- 102b: second part
- 104: sump attachments
- 106: fixation element apertures
- 110: disk portion
- 112: disk
- 113: aperture of disk
- 114: CAM disk
- 116: motor
- 118: housing of flow controller
- 120: spray jet with reduced flow rate
- 122: spray jet with higher flow rate
- 124: first region of tub bottom
- 126: second region of tub bottom
- 128: circulation flow path
- 130: control element
- C: washing fluid flow
- H1, H2: first / second heating section
- R1-R3: first / second / third regeneration section
- D1: first drying section using internal air circulation
- D2: second drying section without air circulation and with door closed
- D3: third drying section with door opened
- WP: washing phase
- CR: cold rinse phase
- HR: hot rinse phase
- DP: drying phase

## Claims

1. Dishwasher (2), comprising:
a cabinet housing a tub (8) for washing articles therein,
a heat pump system having a compressor (92), an evaporator (90), a condenser (44), an expansion valve (88), and a refrigerant flow changing device (86) adapted to change between a normal mode of the heat pump and a reverse mode of the heat pump,
a heat exchanging medium in heat exchanging contact with the evaporator (90),
wherein in the normal mode of the heat pump, the condenser (44) is adapted to heat the washing liquid and the evaporator (90) is adapted to cool the heat exchanging medium, and wherein in the reverse mode of the heat pump, the condenser (44) is adapted to cool the washing liquid and the evaporator (90) is adapted to heat the heat exchanging medium,
a sump (48) for collecting washing liquid,
a control unit adapted to control the operation of the dishwasher (2) during a washing cycle,
a cover element (42) arranged at the bottom (16) of the tub (8) above the sump (48), **characterized in that**
a tub nozzle (100) adapted to supply washing liquid into the interior of the tub (8) and/or a sump nozzle (98) adapted to supply washing liquid into the sump,
wherein the tub nozzle (100) and/or the sump nozzle (98) are at least partially integrated in the cover element (42),
wherein the condenser (44) comprises a first passage (82) for circulating washing liquid and a second passage (84) for circulating refrigerant, wherein the first and second passages (82, 84) being in heat-exchanging contact with each other, and
wherein the control unit is adapted to operate the heat pump in the reverse mode and at least temporally simultaneously to activate a circulation pump (50, 50b) such that the cooled washing liquid from the sump (48) is guided through the tub nozzle (100) into the interior of the tub (8) and/or the sump nozzle (98) into the sump (48).

2. Dishwasher of claim 1, wherein the cover element (42) has a portion formed as a filter adapted to filter washing liquid flowing from the interior of the tub (8) to the sump (48).

3. Dishwasher of claim 1 or 2, wherein the cover element (42) and the sump nozzle (98) and/or the tub nozzle (100) are formed in a single piece, preferably fabricated from a plastic material.

4. Dishwasher of claim 1, 2 or 3, wherein the sump (48) comprises at least a washing fluid outlet A (76) and/or a washing fluid outlet B (78), wherein the washing fluid outlet A (76) is fluidly connected to the sump nozzle (98) via a flow channel (102), and/or the washing fluid outlet B (78) is fluidly connected to the tub nozzle (100).

5. Dishwasher of claim 4, wherein the washing fluid outlet A (76) extends vertical or substantially vertical from the sump (48), and
wherein a side wall of the washing fluid outlet A (76) comprises an aperture fluidly connecting the washing fluid outlet A (76) to the flow channel (102).

6. Dishwasher of any of the preceding claims, wherein the sump nozzle (98) and/or a or the flow channel (102) connected to the sump nozzle (98) is arranged at a lower surface of the cover element (42) and/or the tub nozzle (100) is arranged at a top surface of the cover element (42).

7. Dishwasher of any of claims 4 to 6, wherein a first part (102a) of the flow channel (102) is integrated in the cover element (42), and a second part (102b) of the flow channel (102) is integrated in the sump (48), and
wherein the first part (102a) and the second part (102b) are configured such that when the cover element (42) is mounted at the sump (48), the first and second parts (102a, 102b) form the flow channel (102) for guiding washing liquid from the washing fluid outlet A (76) via the sump nozzle (98) into the sump (48), and
wherein preferably the first part (102a) is formed in a single piece with the cover element (42) and/or the second part (102b) is formed in a single piece with the sump (48).

8. Dishwasher of any of the preceding claims, wherein the sump (48) comprises a plurality of washing fluid outlets (70, 72, 74, 76, 78) connected to a washing liquid conduit system (22) having one or more spray devices (26a, 28a, 30a),
wherein the cover element (42) extends over the washing fluid outlets (70, 72, 74, 76, 78) and the cover element (42) comprises sump attachments (104), each sump attachment (104) sized and shaped to fit over the respective washing liquid outlets (70, 72, 74, 76, 78) of the sump (48) to connect each of the plurality of washing fluid outlets (70, 72, 74, 76, 78) to the respective spray devices (26a, 28a, 30a) and/or to the sump nozzle (98) and/or the tub nozzle (100).

9. Dishwasher of any of the preceding claims, wherein the cover element (42) comprises a hub (96) extending from an upper side of the cover element (42), wherein the hub (96) is adapted to connect one washing fluid outlet (70) of a or the plurality of outlets (70, 72, 74, 76, 78) to a spray device being a lower spray arm (30a).

10. Dishwasher of any of the preceding claims, further comprising a washing liquid cooling path (43) having: an inlet provided at the sump (48), a circulation pump (50, 50b), the first passage (82) of the condenser (44) for cooling down the washing liquid in the reverse mode of the heat pump and the sump nozzle (98) for supplying the cooled washing liquid into the sump (48) and/or the tub nozzle (100) for supplying the cooled washing liquid back to the sump (48) via the tub (8), wherein in particular the washing liquid cooling path bypasses a spray device (26a, 28a, 30a) for spraying washing liquid onto the articles in the tub (8).

11. Dishwasher according to claim 10, wherein the washing liquid cooling path (43) comprises:
a first cooling branch (43a) connecting the first passage (82) of the condenser to the sump nozzle (98), and/or
a second cooling branch (43b) connecting the first passage (82) of the condenser to the tub nozzle (100), wherein the washing liquid guided along the second cooling branch (43b) returns to the sump (48) via the tub (8),
wherein the dishwasher (2) further comprises a hydraulic circulation arrangement having at least one controllable component wherein by the control of the control unit the at least one controllable component is adapted to circulate the washing liquid pumped from the sump (48) along the first cooling branch (43a) and/or the second cooling branch (43b).

12. Dishwasher according to claim 10, further comprising:
a circulation flow path (128) having an inlet provided at the sump (48), and a flow controller (64) or a flow manifold comprising at least an or the outlet A (76) and/or an or the outlet B (78),
wherein the outlet A (76) is connected to the sump nozzle (98), and/or
wherein the outlet B (78) is connected to the tub nozzle (100) within the interior of the tub (8).

13. Dishwasher according to any of the preceding claims, wherein the dishwasher (2) comprises at least one spray device (26a, 28a, 30a) disposed inside the tub (8) and configured to spray washing liquid to the articles in the tub (8), and/or
a or the flow controller (64) having one or more washing fluid outlets (70, 72, 74) connected to one or more spray arms (26a, 28a, 30a) of the spray device,
wherein the control unit is adapted to control the flow controller (64) such that washing liquid circulated through the flow controller (64) is guided to one or more spray arms (26a, 28a, 30a) of the spray device.

14. Dishwasher according to claim 13,
wherein the flow controller (64) is arranged below the cover element (42), and/or
wherein the cover element (42) comprises a plurality of outlets (104) each being assigned to one outlet of the flow controller (64).

15. Method for operating a dishwasher, in particular a dishwasher according to any of the preceding claims,
a cabinet housing a tub (8) for washing articles therein,
a heat pump system having a compressor (92), an evaporator (90), and a condenser (44), an expansion valve (88), and a refrigerant flow changing device (86) adapted to change between a normal mode of the heat pump and a reverse mode of the heat pump,
a heat exchanging medium in heat exchanging contact with the evaporator (90), wherein in the normal mode of the heat pump, the condenser (44) is adapted to heat the washing liquid and the evaporator (90) is adapted to cool the heat exchanging medium, and wherein in the reverse mode of the heat pump, the condenser (44) is adapted to cool the washing liquid and the evaporator (90) is adapted to heat the heat exchanging medium,
a sump (48) for collecting washing liquid,
a cover element (42) arranged at the bottom (16) of the tub (8) above the sump (48), **characterized in that**
a tub nozzle (100) adapted to supply washing liquid into the interior of the tub (8) and/or a sump nozzle (98) adapted to supply washing liquid into the sump (48),
wherein the tub nozzle (100) and/or the sump nozzle (98) are at least partially integrated in the cover element (42), wherein the condenser (44) comprises a first passage (82) for circulating washing liquid and a second passage (84) for circulating refrigerant, wherein the first and second passages (82, 84) being in heat-exchanging contact with each other and
wherein operating the dishwasher (2) comprises:
operating the heat pump in the reverse mode and at least temporally simultaneously to activate a circulation pump (50, 50b) such that the cooled washing liquid from the sump (48) is guided through the tub nozzle (100) into the tub (8) and/or the sump nozzle (98) into the sump (48).

## Patentansprüche

1. Geschirrspüler (2), umfassend:
ein Gehäuse, in dem ein Spülbehälter (8) zum Spülen von Gegenständen untergebracht ist,
ein Wärmepumpensystem mit einem Kompressor (92), einem Verdampfer (90), einem Kondensator (44), einem Expansionsventil (88) und einer Vorrichtung (86) zur Änderung des Kältemittelstroms, die für den Wechsel zwischen einer normalen Betriebsart der Wärmepumpe und einer Umkehrbetriebsart der Wärmepumpe ausgeführt ist,
ein Wärmeaustauschmedium in Wärmeaustauschkontakt mit dem Verdampfer (90),
wobei in der normalen Betriebsart der Wärmepumpe der Kondensator (44) zur Erwärmung der Spülflüssigkeit ausgeführt ist und der Verdampfer (90) zur Kühlung des Wärmeaustauschmediums ausgeführt ist, und wobei in der Umkehrbetriebsart der Wärmepumpe der Kondensator (44) zur Kühlung der Spülflüssigkeit ausgeführt ist und der Verdampfer (90) zur Erwärmung des Wärmeaustauschmediums ausgeführt ist,
einen Spülsumpf (48) zum Auffangen von Spülflüssigkeit,
eine Steuereinheit, die zur Steuerung des Betriebs des Geschirrspülers (2) während eines Spülgangs ausgeführt ist,
ein Abdeckelement (42), das am Boden (16) des Spülbehälters (8) über dem Spülsumpf (48) angeordnet ist, **gekennzeichnet durch**
eine Spülbehälterdüse (100), die zur Zuführung von Spülflüssigkeit in das Innere des Spülbehälters (8) ausgeführt ist, und/oder eine Spülsumpfdüse (98), die zur Zuführung von Spülflüssigkeit in den Spülsumpf ausgeführt ist,
wobei die Spülbehälterdüse (100) und/oder die Spülsumpfdüse (98) mindestens teilweise in das Abdeckelement (42) integriert sind,
wobei der Kondensator (44) einen ersten Durchgang (82) für das Umwälzen von Spülflüssigkeit und einen zweiten Durchgang (84) für das Umwälzen von Kältemittel umfasst, wobei der erste und der zweite Durchgang (82, 84) in Wärmeaustauschkontakt miteinander stehen, und
wobei die Steuereinheit dazu ausgeführt ist, die Wärmepumpe in der Umkehrbetriebsart zu betreiben und mindestens zeitgleich eine Umwälzpumpe (50, 50b) so zu aktivieren, dass die gekühlte Spülflüssigkeit aus dem Spülsumpf (48) durch die Spülbehälterdüse (100) in das Innere des Spülbehälters (8) und/oder die Spülsumpfdüse (98) in den Spülsumpf (48) geführt wird.

2. Geschirrspüler nach Anspruch 1, wobei das Abdeckelement (42) einen Abschnitt aufweist, der als ein Filter ausgebildet ist, der zum Filtern von Spülflüssigkeit, die aus dem Inneren des Spülbehälters (8) in den Spülsumpf (48) fließt, ausgeführt ist.

3. Geschirrspüler nach Anspruch 1 oder 2, wobei das Abdeckelement (42) und die Spülsumpfdüse (98) und/oder die Spülbehälterdüse (100) einteilig ausgebildet sind und vorzugsweise aus einem Kunststoffmaterial hergestellt sind.

4. Geschirrspüler nach Anspruch 1, 2 oder 3, wobei der Spülsumpf (48) mindestens einen Spülflüssigkeitsauslass A (76) und/oder einen Spülflüssigkeitsauslass B (78) umfasst, wobei der Spülflüssigkeitsauslass A (76) über einen Strömungskanal (102) fluidisch mit der Spülsumpfdüse (98) verbunden ist und/oder der Spülflüssigkeitsauslass B (78) fluidischmit der Spülbehälterdüse (100) verbunden ist.

5. Geschirrspüler nach Anspruch 4, wobei sich der Spülflüssigkeitsauslass A (76) senkrecht oder im Wesentlichen senkrecht von dem Spülsumpf (48) erstreckt und
wobei eine Seitenwand des Spülflüssigkeitsauslasses A (76) eine Öffnung umfasst, die den Spülflüssigkeitsauslass A (76) fluidisch mit dem Strömungskanal (102) verbindet.

6. Geschirrspüler nach einem der vorhergehenden Ansprüche, wobei die Spülsumpfdüse (98) und/oder ein oder der mit der Spülsumpfdüse (98) verbundene Strömungskanal (102) an einer unteren Fläche des Abdeckelements (42) angeordnet ist und/oder die Spülbehälterdüse (100) an einer oberen Fläche des Abdeckelements (42) angeordnet ist.

7. Geschirrspüler nach einem der Ansprüche 4 bis 6, wobei ein erster Teil (102a) des Strömungskanals (102) in das Abdeckelement (42) integriert ist und ein zweiter Teil (102b) des Strömungskanals (102) in den Spülsumpf (48) integriert ist und
wobei der erste Teil (102a) und der zweite Teil (102b) so ausgestaltet sind, dass der erste und der zweite Teil (102a, 102b) den Strömungskanal (102) bilden, um Spülflüssigkeit von dem Spülflüssigkeitsauslass A (76) über die Spülsumpfdüse (98) in den Spülsumpf (48) zu leiten, wenn das Abdeckelement (42) an dem Spülsumpf (48) montiert ist, und
wobei vorzugsweise der erste Teil (102a) einteilig mit dem Abdeckelement (42) ausgebildet ist und/oder der zweite Teil (102b) einteilig mit dem Spülsumpf (48) ausgebildet ist.

8. Geschirrspüler nach einem der vorhergehenden Ansprüche, wobei der Spülsumpf (48) eine Vielzahl von Spülflüssigkeitsauslässen (70, 72, 74, 76, 78) umfasst, die mit einem Spülflüssigkeitsleitungssystem (22) verbunden sind, das eine oder mehrere Sprühvorrichtungen (26a, 28a, 30a) aufweist,
wobei sich das Abdeckelement (42) über die Spülflüssigkeitsauslässe (70, 72, 74, 76, 78) erstreckt und das Abdeckelement (42) Spülsumpfaufsätze (104) umfasst, wobei jeder Spülsumpfaufsatz (104) so dimensioniert und geformt ist, dass er über die jeweiligen Spülflüssigkeitsauslässe (70, 72, 74, 76, 78) des Spülsumpfs (48) passt, um jede der Vielzahl von Spülflüssigkeitsauslässen (70, 72, 74, 76, 78) mit den jeweiligen Sprühvorrichtungen (26a, 28a, 30a) zu verbinden und/oder mit der Spülsumpfdüse (98) und/oder der Spülbehälterdüse (100).

9. Geschirrspüler nach einem der vorhergehenden Ansprüche, wobei das Abdeckelement (42) eine Nabe (96) umfasst, die sich von einer oberen Seite des Abdeckelements (42) erstreckt, wobei die Nabe (96) dazu ausgeführt ist, einen Spülflüssigkeitsauslass (70) eines oder der Vielzahl von Auslässen (70, 72, 74, 76, 78) mit einer Sprühvorrichtung zu verbinden, bei der es sich um einen unteren Sprüharm (30a) handelt.

10. Geschirrspüler nach einem der vorhergehenden Ansprüche, ferner umfassend einen Spülflüssigkeitskühlweg (43) mit Folgendem: einem an dem Spülsumpf (48) vorgesehenen Einlass, einer Umwälzpumpe (50, 50b), den ersten Durchgang (82) des Kondensators (44) zum Abkühlen der Spülflüssigkeit in der Umkehrbetriebsart der Wärmepumpe und der Spülsumpfdüse (98) zum Zuführen der gekühlten Spülflüssigkeit in den Spülsumpf (48) und/oder der Spülbehälterdüse (100) zum Zuführen der gekühlten Spülflüssigkeit zurück zu dem Spülsumpf (48) über den Spülbehälter (8), wobei insbesondere der Spülflüssigkeitskühlweg eine Sprühvorrichtung (26a, 28a, 30a) umgeht, um Spülflüssigkeit auf die Gegenstände in dem Spülbehälter (8) zu sprühen.

11. Geschirrspüler nach Anspruch 10, wobei der Spülflüssigkeitskühlweg (43) Folgendes umfasst:
einen ersten Kühlzweig (43a), der den ersten Durchgang (82) des Kondensators mit der Spülsumpfdüse (98) verbindet, und/oder
einen zweiten Kühlzweig (43b), der den ersten Durchgang (82) des Kondensators mit der Spülbehälterdüse (100) verbindet, wobei die entlang des zweiten Kühlzweigs (43b) geführte Spülflüssigkeit über den Spülbehälter (8) in den Spülsumpf (48) zurückkehrt,
wobei der Geschirrspüler (2) ferner eine hydraulische Umwälzanordnung mit mindestens einem steuerbaren Bauteil umfasst, wobei das mindestens eine Bauteil durch die Steuerung der Steuereinheit dazu ausgeführt ist, die aus dem Spülsumpf (48) gepumpte Spülflüssigkeit entlang des ersten Kühlzweigs (43a) und/oder des zweiten Kühlzweigs (43b) umzuwälzen.

12. Geschirrspüler nach Anspruch 10, ferner umfassend:
einen Umwälzströmungspfad (128) mit einem an dem Spülsumpf (48) vorgesehenen Einlass und einen Durchflussregler (64) oder einen Durchflussverteiler, der mindestens einen oder den Auslass A (76) und/oder einen oder den Auslass B (78) umfasst,
wobei der Auslass A (76) mit der Spülsumpfdüse (98) verbunden ist und/oder
wobei der Auslass B (78) mit der Spülbehälterdüse (100) im Inneren des Spülbehälters (8) verbunden ist.

13. Geschirrspüler nach einem der vorhergehenden Ansprüche, wobei der Geschirrspüler (2) mindestens eine Sprühvorrichtung (26a, 28a, 30a) umfasst, die in dem Spülbehälter (8) angeordnet und so ausgestaltet ist, dass sie Spülflüssigkeit auf die Gegenstände in dem Spülbehälter (8) sprüht, und/oder
einen oder den Durchflussregler (64) mit einem oder mehreren Spülflüssigkeitsauslässen (70, 72, 74), die mit einem oder mehreren Sprüharmen (26a, 28a, 30a) der Sprühvorrichtung verbunden sind,
wobei die Steuereinheit so zur Steuerung des Durchflussreglers (64) ausgeführt ist, dass die durch den Durchflussregler (64) umgewälzte Spülflüssigkeit zu einem oder mehreren Sprüharmen (26a, 28a, 30a) der Sprühvorrichtung geführt wird.

14. Geschirrspüler nach Anspruch 13,
wobei der Durchflussregler (64) unter dem Abdeckelement (42) angeordnet ist und/oder
wobei das Abdeckelement (42) eine Vielzahl von Auslässen (104) umfasst, die jeweils einem Auslass des Durchflussreglers (64) zugeordnet sind.

15. Verfahren zum Betreiben eines Geschirrspülers, insbesondere eines Geschirrspülers nach einem der vorhergehenden Ansprüche,
ein Gehäuse, in dem ein Spülbehälter (8) zum Spülen von Gegenständen untergebracht ist,
ein Wärmepumpensystem mit einem Kompressor (92), einem Verdampfer (90), einem Kondensator (44), einem Expansionsventil (88) und einer Vorrichtung (86) zur Änderung des Kältemittelstroms, die für den Wechsel zwischen einer normalen Betriebsart der Wärmepumpe und einer Umkehrbetriebsart der Wärmepumpe ausgeführt ist,
ein Wärmeaustauschmedium in Wärmeaustauschkontakt mit dem Verdampfer (90),
wobei in der normalen Betriebsart der Wärmepumpe der Kondensator (44) zur Erwärmung der Spülflüssigkeit ausgeführt ist und der Verdampfer (90) zur Kühlung des Wärmeaustauschmediums ausgeführt ist, und wobei in der Umkehrbetriebsart der Wärmepumpe der Kondensator (44) zur Kühlung der Spülflüssigkeit ausgeführt ist und der Verdampfer (90) zur Erwärmung des Wärmeaustauschmediums ausgeführt ist,
einen Spülsumpf (48) zum Auffangen von Spülflüssigkeit,
ein Abdeckelement (42), das am Boden (16) des Spülbehälters (8) über dem Spülsumpf (48) angeordnet ist, **gekennzeichnet durch**
eine Spülbehälterdüse (100), die zur Zuführung von Spülflüssigkeit in das Innere des Spülbehälters (8) ausgeführt ist, und/oder eine Spülsumpfdüse (98), die zur Zuführung von Spülflüssigkeit in den Spülsumpf (48) ausgeführt ist,
wobei die Spülbehälterdüse (100) und/oder die Spülsumpfdüse (98) mindestens teilweise in das Abdeckelement (42) integriert sind, wobei der Kondensator (44) einen ersten Durchgang (82) für das Umwälzen von Spülflüssigkeit und einen zweiten Durchgang (84) für das Umwälzen von Kältemittel umfasst, wobei der erste und der zweite Durchgang (82, 84) in Wärmeaustauschkontakt miteinander stehen und
wobei der Betrieb des Geschirrspülers (2) Folgendes umfasst:
Betreiben der Wärmepumpe in der Umkehrbetriebsart und mindestens zeitgleiches Aktivieren einer Umwälzpumpe (50, 50b) derart, dass die gekühlte Spülflüssigkeit aus dem Spülsumpf (48) durch die Spülbehälterdüse (100) in den Spülbehälter (8) und/oder die Spülsumpfdüse (98) in den Spülsumpf (48) geleitet wird.

## Revendications

1. Lave-vaisselle (2), comprenant :
un meuble contenant une cuve (8) pour laver en son sein des articles,
un système de pompe à chaleur comprenant un compresseur (92), un évaporateur (90), un condenseur (44), un détendeur (88) et un dispositif de changement d'écoulement de réfrigérant (86) conçu pour passer d'un mode normal de la pompe à chaleur à un mode inverse de la pompe à chaleur,
un fluide d'échange de chaleur en contact d'échange de chaleur avec l'évaporateur (90),
en mode normal de la pompe à chaleur, le condenseur (44) étant conçu pour chauffer le liquide de lavage et l'évaporateur (90) étant conçu pour refroidir le fluide d'échange de chaleur, et en mode inverse de la pompe à chaleur, le condenseur (44) étant conçu pour refroidir le liquide de lavage et l'évaporateur (90) étant conçu pour chauffer le fluide d'échange de chaleur,
un bac (48) pour recueillir le liquide de lavage,
une unité de commande conçue pour commander le fonctionnement du lave-vaisselle (2) pendant un cycle de lavage,
un élément de couvercle (42) disposé au niveau de la partie inférieure (16) de la cuve (8) au-dessus du bac (48), **caractérisé par**
une buse de cuve (100) conçue pour fournir du liquide de lavage à l'intérieur de la cuve (8) et/ou une buse de bac (98) conçue pour fournir du liquide de lavage dans le bac,
la buse de cuve (100) et/ou la buse de bac (98) étant intégrées au moins partiellement dans l'élément de couvercle (42),
le condenseur (44) comprenant un premier passage (82) pour faire circuler le liquide de lavage et un second passage (84) pour faire circuler le réfrigérant, les premier et second passages (82, 84) étant en contact d'échange de chaleur l'un avec l'autre, et
l'unité de commande étant conçue pour faire fonctionner la pompe à chaleur en mode inverse et au moins temporairement en même temps pour activer une pompe de circulation (50, 50b) de sorte que le liquide de lavage refroidi provenant du bac (48) soit guidé à travers la buse de cuve (100) à l'intérieur de la cuve (8) et/ou la buse de bac (98) dans le bac (48).

2. Lave-vaisselle selon la revendication 1, l'élément de couvercle (42) présentant une partie formée comme un filtre conçue pour filtrer le liquide de lavage s'écoulant de l'intérieur de la cuve (8) vers le bac (48).

3. Lave-vaisselle selon la revendication 1 ou 2, **caractérisé en ce que** l'élément de couvercle (42) et la buse de bac (98) et/ou la buse de cuve (100) sont réalisés d'une seule pièce, de préférence en matière plastique.

4. Lave-vaisselle selon la revendication 1, 2 ou 3, le bac (48) comprenant au moins une sortie de liquide de lavage A (76) et/ou une sortie de liquide de lavage B (78), la sortie de liquide de lavage A (76) étant reliée de manière fluidique à la buse de bac (98) par l'intermédiaire d'un canal d'écoulement (102) et/ou la sortie de liquide de lavage B (78) étant reliée de manière fluidique à la buse de cuve (100).

5. Lave-vaisselle selon la revendication 4, la sortie de fluide de lavage A (76) s'étendant verticalement ou sensiblement verticalement à partir du bac (48), et
une paroi latérale de la sortie de fluide de lavage A (76) comprenant une ouverture reliant fluidiquement la sortie de fluide de lavage A (76) au canal d'écoulement (102).

6. Lave-vaisselle selon l'une quelconque des revendications précédentes, la buse de bac (98) et/ou un canal d'écoulement (102) reliés à la buse de bac (98) étant disposés sur une surface inférieure de l'élément de couvercle (42) et/ou la buse de cuve (100) étant disposée au niveau d'une surface supérieure de l'élément de couvercle (42).

7. Lave-vaisselle selon l'une quelconque des revendications 4 à 6, une première partie (102a) du canal d'écoulement (102) étant intégrée dans l'élément de couvercle (42) et une seconde partie (102b) du canal d'écoulement (102) étant intégrée dans le bac (48), et la première partie (102a) et la seconde partie (102b) étant conçues de sorte que lorsque l'élément de couvercle (42) est monté au niveau du bac (48), les première et seconde parties (102a, 102b) forment le canal d'écoulement (102) pour guider le liquide de lavage de la sortie de liquide de lavage A (76) par l'intermédiaire de la buse de bac (98) dans le bac (48),
de préférence, la première partie (102a) étant formée d'une seule pièce avec l'élément de couvercle (42) et/ou la seconde partie (102b) étant formée d'une seule pièce avec le bac (48).

8. Lave-vaisselle selon l'une quelconque des revendications précédentes, le bac (48) comprenant une pluralité de sorties de fluide de lavage (70, 72, 74, 76, 78) reliées à un système de conduits de liquide de lavage (22) comprenant un ou plusieurs dispositifs de pulvérisation (26a, 28a, 30a),
l'élément de couvercle (42) s'étendant sur les sorties de liquide de lavage (70, 72, 74, 76, 78) et l'élément de couvercle (42) comprenant des éléments de fixation de bac (104), chaque élément de fixation de bac (104) étant dimensionné et formé pour s'adapter sur les sorties de liquide de lavage (70, 72, 74, 76, 78) respectives du bac (48) pour relier chacune de la pluralité de sorties de liquide de lavage (70, 72, 74, 76, 78) aux dispositifs de pulvérisation (26a, 28a, 30a) respectifs et/ou à la buse de bac (98) et/ou à la buse de cuve (100).

9. Lave-vaisselle selon l'une quelconque des revendications précédentes, l'élément de couvercle (42) comprenant un moyeu (96) s'étendant à partir d'un côté supérieur de l'élément de couvercle (42), le moyeu (96) étant conçu pour relier une sortie de fluide de lavage (70) d'une ou de la pluralité de sorties (70, 72, 74, 76, 78) à un dispositif de pulvérisation qui est un bras de pulvérisation inférieur (30a).

10. Lave-vaisselle selon l'une quelconque des revendications précédentes, comprenant en outre un trajet de refroidissement de liquide de lavage (43) comprenant : une entrée située au niveau du bac (48), une pompe de circulation (50, 50b), le premier passage (82) du condenseur (44) pour refroidir le liquide de lavage en mode inverse de la pompe à chaleur et la buse de bac (98) pour amener le liquide de lavage refroidi dans le bac (48) et/ou la buse de cuve (100) pour renvoyer le liquide de lavage refroidi dans le bac (48) par l'intermédiaire de la cuve (8), le trajet de refroidissement de liquide de lavage contournant en particulier un dispositif de pulvérisation (26a, 28a, 30a) pour pulvériser un liquide de lavage sur les articles dans la cuve (8).

11. Lave-vaisselle selon la revendication 10, le trajet de refroidissement de liquide de lavage (43) comprenant :
une première branche de refroidissement (43a) reliant le premier passage (82) du condenseur à la buse de bac (98), et/ou
une seconde branche de refroidissement (43b) reliant le premier passage (82) du condenseur à une buse de cuve (100), le liquide de lavage guidé le long de la seconde branche de refroidissement (43b) retournant au bac (48) par l'intermédiaire de la cuve (8),
le lave-vaisselle (2) comprenant en outre un agencement de circulation hydraulique ayant au moins un composant pouvant être commandé, par la commande de l'unité de commande, l'au moins un composant pouvant être commandé étant conçu pour faire circuler le liquide de lavage pompé depuis le bac (48) le long de la première branche de refroidissement (43a) et/ou de la seconde branche de refroidissement (43b).

12. Lave-vaisselle selon la revendication 10, comprenant en outre :
un trajet d'écoulement de circulation (128) ayant une entrée située au niveau du bac (48), et un régulateur de débit (64) ou un collecteur d'écoulement comprenant au moins une ou la sortie A (76) et/ou une ou la sortie B (78),
la sortie A (76) étant reliée à la buse de bac (98), et/ou
la sortie B (78) étant reliée à la buse de cuve (100) à l'intérieur de la cuve (8).

13. Lave-vaisselle selon l'une quelconque des revendications précédentes, le lave-vaisselle (2) comprenant au moins un dispositif de pulvérisation (26a, 28a, 30a) disposé à l'intérieur de la cuve (8) et conçu pour pulvériser du liquide de lavage sur les articles dans la cuve (8), et/ou
un ou le régulateur de débit (64) comportant une ou plusieurs sorties de fluide de lavage (70, 72, 74) reliées à un ou plusieurs bras de pulvérisation (26a, 28a, 30a) du dispositif de pulvérisation,
l'unité de commande étant conçue pour commander le régulateur de débit (64) de sorte que le liquide de lavage circulant à travers le régulateur de débit (64) soit guidé vers un ou plusieurs bras de pulvérisation (26a, 28a, 30a) du dispositif de pulvérisation.

14. Lave-vaisselle selon la revendication 13,
le régulateur de débit (64) étant disposé au-dessous de l'élément de couvercle (42), et/ou
l'élément de couvercle (42) comprenant une pluralité de sorties (104) associées chacune à une sortie du régulateur de débit (64).

15. Procédé de fonctionnement d'un lave-vaisselle, en particulier d'un lave-vaisselle selon l'une quelconque des revendications précédentes,
un meuble contenant une cuve (8) pour laver en son sein des articles,
un système de pompe à chaleur comprenant un compresseur (92), un évaporateur (90), et un condenseur (44), un détendeur (88) et un dispositif de changement d'écoulement de réfrigérant (86) conçu pour passer d'un mode normal de la pompe à chaleur à un mode inverse de la pompe à chaleur,
un fluide d'échange de chaleur en contact d'échange de chaleur avec l'évaporateur (90),
en mode normal de la pompe à chaleur, le condenseur (44) étant conçu pour chauffer le liquide de lavage et l'évaporateur (90) étant conçu pour refroidir le fluide d'échange de chaleur, et en mode inverse de la pompe à chaleur, le condenseur (44) étant conçu pour refroidir le liquide de lavage et l'évaporateur (90) étant conçu pour chauffer le fluide d'échange de chaleur,
un bac (48) pour recueillir le liquide de lavage,
un élément de couvercle (42) disposé au niveau de la partie inférieure (16) de la cuve (8) au-dessus du bac (48), **caractérisé par**
une buse de cuve (100) conçue pour fournir du liquide de lavage à l'intérieur de la cuve (8) et/ou une buse de bac (98) conçue pour fournir du liquide de lavage dans le bac (48),
la buse de cuve (100) et/ou la buse de bac (98) étant au moins partiellement intégrées dans l'élément de couvercle (42), le condenseur (44) comprenant un premier passage (82) pour la circulation du liquide de lavage et un second passage (84) pour la circulation du réfrigérant, les premier et second passages (82, 84) étant en contact d'échange de chaleur l'un avec l'autre et l'autre et
le fonctionnement du lave-vaisselle (2) comprenant :
le fonctionnement de la pompe à chaleur en mode inverse et au moins temporairement en même temps pour activer une pompe de circulation (50, 50b) de sorte que le liquide de lavage refroidi provenant du bac (48) soit guidé à travers la buse de cuve (100) dans la cuve (8) et/ou la buse de bac (98) dans le bac (48).
